# EUROPEAN PATENT SPECIFICATION

(11) **EP 1 286 284 B1**
(45) Date of publication and mention of the grant of the patent: **14.06.2006**
(21) Application number: 01306941.4
(22) Date of filing: 15.08.2001
(51) Int. Cl.: G06F 17/24

(54) **Spreadsheet data processing system**
System zur Analyse von Tabellenkalkulationsdaten
Système d'analyse de données de tableur

(43) Date of publication of application: 26.02.2003
(73) Proprietor: SVA Software Ltd., Bath, BA2 5JN (GB)
(72) Inventor: Richter, John Anderson, The Park, Nottingham NG7 1AR (GB); Tregenza, Christopher Roy, Nottingham, NG7 1GU (GB); Siersted, Morten, Combe Down, Bath BA2 5JN (GB)
(74) Representative: Newell, William Joseph

(56) References cited:
- US-A- 4 992 939
- RAY BUTLER: "The Subversive Spreadsheet" EUSPRIG, [Online] XP002181432 Retrieved from the Internet: <URL:http://www.gre.ac.uk/~cd02/eusprig/Ra yButler1.htm> [retrieved on 2001-10-29]
- N.N.: "Spreadsheet Professional Fact Sheet" GRAY MATTER, [Online] 20 September 1996 (1996-09-20), XP002181435 Retrieved from the Internet: <URL:http://www.graymatter.com/blobs/doc/0 0000833.doc; http://www.greymatter.com/products/0001045 7.htm; http://www.greymatter.com/prdidx/00006869. htm#00006869> [retrieved on 2001-10-29]
- MELISSA AND ANTHONY BERGLAS: "Spreadsheet Detective" SOUTHERN CROSS SOFTWARE, [Online] 25 July 2001 (2001-07-25), XP002181433 Retrieved from the Internet: <URL:http://www.spreadsheetdetective.com; http://www.uq.net.au/detective/home.html> [retrieved on 2001-10-29]

## Description

This present invention relates to spreadsheet data.

Spreadsheets are widely used in the analysis of numerical data such as historical accounts and financial projections. Indeed, the use of spreadsheets in such fields is prolific and computer software for generating spreadsheets, such as Microsoft Excel® and Lotus 1-2-3® , is nearly as common as word processing software.

A spreadsheet usually comprises arrays of cells, known as worksheets. Within each worksheet information is generally arranged in some form of table (consisting of rows and columns of cells). Tables typically contain values, often but not always numeric, positioned at the intersection of rows/columns, which in turn generally contain descriptive labels explaining the meaning of the values displayed.

For example, a table displaying revenues may typically have a row in which the text descriptor "Revenues" is displayed in a first, left-hand cell and the (numeric) values for revenues are displayed in cells of the row to the right of the text descriptor. The numeric value in each successive cell might relate to revenues for a period ending on a particular date (with the related date descriptor information usually being held in the cells of a separate row above the row of numeric values). Alternatively, this information could be displayed equivalently by arranging the figures for revenues vertically, with the text descriptor "Revenues" located in a separate cell above the series of numeric values, and each of the successive values described by dates located in separate cells to the left of the relevant numeric value.

Furthermore, values displayed in each cell can be calculated by a formula written within the cell. Such formulas are usually dependent on values displayed in other cells, which in turn may be calculated by formulas written within those cells, etc. Thus, a spreadsheet generally comprises a complex inter-relationship of cells, each displaying values dependent on the values of other cells of the spreadsheet. The values throughout the spreadsheet can be automatically re-calculated on adjustment of a value displayed in single cell. This makes a spreadsheet a powerful tool for analysing numeric data.

However, it can be difficult to understand from simply looking at a spreadsheet how the different tables of information and constituent cells are inter-related. Generally, understanding is reliant on the layout of the tables and, in particular, the text and date descriptors referred to above. Even then, it may be unclear how particular values are derived without careful analysis of the underlying formulas to determine to which values the formula of a particular cell refers and, in turn, to which values the formulas of those cells refer, etc. Whilst some spreadsheet software has attempted to address this problem by providing graphical tools for highlighting how values in cells are derived, it remains a difficult and laborious task to fully and properly analyse a spreadsheet.

It is therefore common for complex spreadsheets to contain errors and design flaws. Whilst technological errors certainly occur (and this problem is well-publicised in the trade), more frequent and serious errors often relate to key elements of the business being omitted or incorrectly reflected in the model. Clearly, any system which makes spreadsheet data easier for a human to read and understand will reduce the risk errors of either general type.

"The Subversive Spreadsheet" by Ray Butler (EUSPRIG, XP002181432 (retrieved online from
http://www.gre.ac.uk/~cd02/eusprig/RayButlerl.htm))
includes a discussion of the "Spreadsheet Professional" software tool produced by Spreadsheet Innovations Ltd of London, United Kingdom (as described in the "Spreadsheet Professional Fact Sheet" obtainable online from http://www.greymatter.com). This is an add-in for Microsoft Excel^{™} that can document and test Excel spreadsheets to give descriptions of risks arising from some error conditions it can discover. This tool is an example of a spreadsheet cell-based technique and so involves a large amount of data (a typical spreadsheet used in industry can occupy some 250,000 cells) and therefore any review that begins with such a population of data elements will be inefficient and prone to inundating the user with erroneous and/or immaterial reports.

According to a first aspect of the present invention there is provided a method of processing spreadsheet data, the method including steps of:
identifying line items from data constituting a spreadsheet, where a line item is identified as a group of related cell data including identifier data indicating the meaning or purpose of data in the group, and a value or a series of values;
analysing any inter-dependencies among some or all of the identified line items, and
storing data defining at least some of the identified line items and the identified inter-dependencies.

The identifier data may simply be a spreadsheet label or it may be based on data drawn from more than one cell. The step of identifying line items may include a step of assigning a unique identifier to each said line item.

By way of example, a spreadsheet may contain a series of values arrayed in a range of adjacent cells in a particular row. A cell with a text value representing a label (e.g. "Revenues") for the values might be found on the same row to the left of the values. Furthermore, a range of dates could exist in a row above the values, aligned above each of the values. Each of these cells, and the data they contain, would normally be identified as a line item, likely named "Revenues".

Furthermore, the values for the Revenues line item could be derived from a formula (or substantially equivalent copies of the formula for each value on the row), represented, say, by the cell-based references = (cell) J45 + (cell) J50. These cells in turn might be identified with data for the line items "Fixed Revenues" and "Variable Revenues" respectively, and hence the inter-dependency of Revenues with these other line items can be so derived as "= Fixed Revenues + Variable Revenues".

In general terms, a line item can be thought of as a set of information, complete in itself, forming a conventional item of financial or other numeric information.

The step of identifying line items can include a step of identifying a series relating to one or more values of the line item. Such a series may be defined in time (e.g. a series of dates) or through a sequence of numbers reproduced by a standard functional relationship (e.g. linear spacing, geometric, etc). The data defining the line item may include data defining such a series.

The step of identifying a series may include a step of grouping adjacent spreadsheet cells into a single said line item if the cells contain data representing functionally equivalent formulas. Equivalent formulas can be thought of as ones that are created using a spreadsheet software "copy" command through the axis along which the values of a line item are arrayed, i.e. across a row or a column.

The step of identifying line items preferably includes a step of identifying data areas in the spreadsheet, where a data area contains data that is common to one or more line items within it (for example several line items all sharing the same series of dates), so that line items are preferably identified within each said data area found.

The step of identifying data areas may further include a step of analysing spreadsheet cell data to identify cells that are likely to be used as headers. This analysis may involve checking characteristics of the cell, such as the font of the text and/or the presence of dates or the presence of words that are commonly used in headers. A data store including a list of words commonly used headers may be reference for this purpose.

The step of analysing the inter-dependencies among some or all of the identified line items preferably includes steps of:
identifying any other line items that influence the state of a particular line item, and/or
identifying any other line items whose states rely on the line item.

The step of analysing the inter-dependencies among line items may further include a step of determining a type for the identified line item. The line item can be determined to be an "input" line item if its state does not rely on any other line item (i.e. the value of the line item is directly equivalent to a value entered in one or more spreadsheet cells associated with the line item). The type of the line item may determined to be "calculation" if the value of the line item is derived using an expression relying on cell-based arguments (generally to other line items) and/or spreadsheet formula functions. Alternatively, the type of the line item may be determined to be "call-up" if the values of the line item are identical to the values of another line item by means of a direct cell reference to values in the other line item.

The step of analysing identified line items (for line items identified as a calculation type) may include steps of:
obtaining data from the spreadsheet cell(s) containing the formula from which the value(s) of the line item are derived;
breaking down the data describing the formula into tokens, and
if a said token is a reference to a spreadsheet cell, converting the cell reference to a reference to a corresponding line item.

The step of analysing identified line items (for line items identified as a calculation type) may further include steps of:
checking if its formula relates to inter-dependencies among line items represented by series of values, and
converting the formula into an expression indicating any offsets in these inter-dependencies (e.g. a reference to another line item, but related to the previous period in time).

The step of storing data may include a step of storing further associated data with the line item, the associated data being selected from the set:
text that conveys meaning as to the purpose of the line item;
an indicator whether the line item is a constant (a single value) or a series (an array of values);
arrays referencing pointers to any precedent and/or any dependent line items;
for calculation line items, a structural representation of the formula of the line item;
an array of one or more values for the line item;
a reference to a location of one or more cell in the spreadsheet with which the line item is associated;
data describing how values for the line item are displayed;
comments included in the spreadsheet file, or
comments associated with the analysis of the spreadsheet data.

The step of storing data may further include a step of filtering line items of the call-up type from being stored. Furthermore, line items which are substantially identical to another line item may not be stored, or relevant information from such similar line items may be combined into one line item in the output file.

The step of storing data may further include a step of storing data defining at least some of the data areas and preferably also their relationships with the line items.

The method may further include a step of providing a display representing at least one line item. The display may also include some or all of the data associated with the line item(s). The data that is to be displayed may be user-selectable.

The display may include a graph representing values of line item. The display can represent relationships between line items by means of lines leading from a line item to any other line items (precedents) that determine the state of the line item and/or any other line items (dependents) whose state rely on the line item. The representations of the line items in the display may be user-selectable so that selecting a precedent or dependent line item reveals any dependent or precedent line items of the selected line item.

The method may further include a step of storing data describing which line items were selected by a user, and preferably the order in which they were selected. This can be particularly useful for "tracing" the inter-dependencies between line items.

The display may include information indicating the number and location of line items common to more than one spreadsheet worksheet.

The data constituting a spreadsheet is typically a data file output by conventional spreadsheet software.

According to a second aspect of the present invention there is provided apparatus for storing data relating to a spreadsheet, the apparatus including:
a spreadsheet analysis component for identifying line items from data constituting a spreadsheet, where a line item is identified as a group of related cell data including identifier data indicating the meaning or purpose of data in the group, and a value or a series of values;
a line item analysis component for analysing any inter-dependencies among some or all of the identified line items, and
an output component for storing data defining at least some of the identified line items and the identified inter-dependencies.

According to a third aspect of the present invention there is provided a computer program product comprising a computer readable medium, having thereon:
computer program code means, when the program code is loaded, to make the computer execute a procedure to:
   identify line items from data constituting a spreadsheet, where a line item is identified as a group of related cell data including identifier data indicating the meaning or purpose of data in the group, and a value or a series of values;
   analyse any inter-dependencies among some or all of the identified line items, and
   store data defining at least some of the identified line items and the identified inter-dependencies.

According to a fourth aspect of the present invention there is provided a method of storing data constituting a spreadsheet suitable for use with conventional spreadsheet software. The spreadsheet data can be converted from data defining a set of line items and their inter-relationships. The spreadsheet data is preferably converted in accordance with stylistic rules. The stylistic rules can relate to the complexity or length of formulas. The rules may also relate to formatting of cells.

According to a fifth aspect of the invention there is provided a method of comparing a first set of line items with one or more other sets of line items. The sets of line items are typically contained in files output by the Scanner module. The line items in the other set(s) may be classified as "identical", "changed", "new" or "deleted" in comparison with the first set of line items. Data associated with line items can also be checked for changes. Examples of changes relating to line items that may be detected include: location of data corresponding to the line item in a spreadsheet; changes in its label; the type of a line item; any formula; its units, etc.

The invention also extends to any apparatus or computer program product that is configured to carry out a method in accordance with any aspect of the invention described.

Whilst the invention has been described above, it extends to any inventive combination of the features set out above or in the following description.

The invention may be performed in various ways, and, by way of example only, an embodiment thereof will now be described, reference being made to the accompanying drawings, in which:-
Figure 1 illustrates schematically a personal computer containing spreadsheet data communicating with a spreadsheet data processing system of the preferred embodiment;
Figure 2 illustrates schematically steps that typically occur during interaction between the user of the personal computer and the spreadsheet data processing system;
Figure 3 illustrates schematically an outline of steps performed by a Scanner module of the spreadsheet data processing system;
Figures 4 to 21 illustrate schematically in more detail the steps outlined in Figure 3;
Figure 22 shows an example of a spreadsheet to illustrate operation of the Scanner module;
Figures 23 and 24 show examples of screen displays produced by a Viewer module of the spreadsheet data processing system;
Figures 25 to 28 illustrate schematically steps performed by a Comparator module of the spreadsheet data processing system, and
Figures 29 and 30 illustrate schematically steps performed by a Re-writer module of the spreadsheet data processing system.

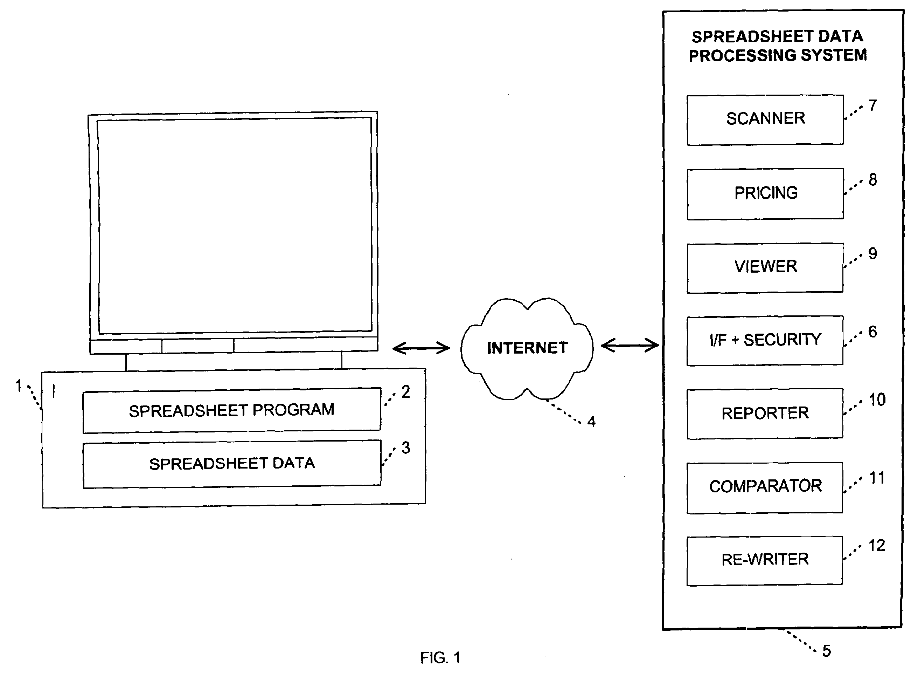

The embodiment of Figure 1 is based on a client-server type implementation operating over the internet; however, it will be understood that the various software modules could in fact be operating on one computer or that the data could be transferred using storage medium such as a CD-ROM.

In the example, a personal computer (PC) 1 includes a processor and memory configured to execute spreadsheet software 2, such as Microsoft Excel(TM). The spreadsheet software 2 operates on spreadsheet data 3 and is capable of outputting a file containing the spreadsheet data suitable for use on compatible software executing on another computer.

The PC 1 is connected to the internet 4 by conventional means, e.g. a modem, and can transfer data to and from a remote processor and memory operating as a spreadsheet data processing system 5. The system 5 may be a single computer or separate computers may be used to execute the various software modules. The system 5 includes an Interface and Security module 6 which allows the user computer 1 to transfer data to and from the system 5 via a World Wide Web interface and provides security protection features such as encryption and virus checking for the transferred data.

The system 5 further includes the following modules, which will be described further below: Scanner 7, Pricing 8, Viewer 9, Reporter 10, Comparator 11 and Re-writer 12.

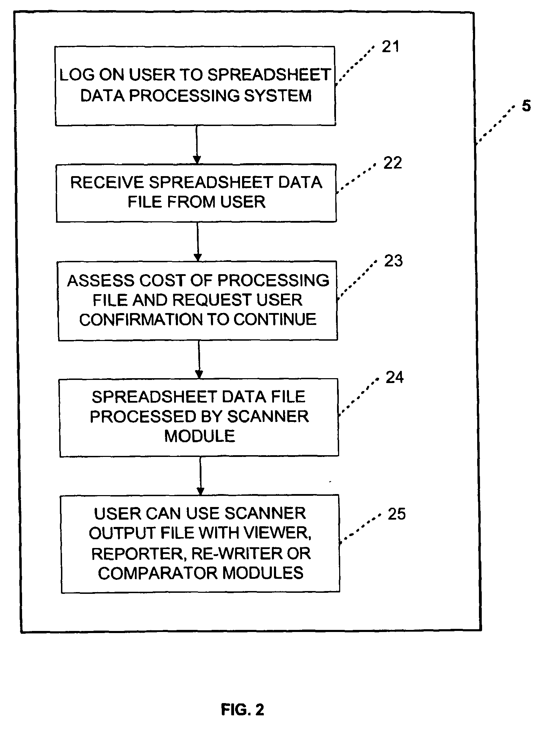

Referring to Figure 2, a sequence of steps which typically occur during interaction between a user of the PC 1 and the spreadsheet data processing system 5 is shown. At step 21, the user accesses the spreadsheet data processing system 5 via the internet, typically by navigating WWW browser software such as Microsoft Explorer (TM). The Interface and Security module 6 can confirm the identity of the user by requesting a user name and password. At step 22 the user transfers a file containing spreadsheet data 3 to the system 5. This can be achieved using known techniques such as File Transfer Protocol and the Interface and Security module 6 can be used to check the file for viruses and decrypt it, etc. More than one file can be transferred for scanning if desired.

At step 23 the Pricing module 8 analyses the spreadsheet data file to provide the user with a cost for analysing the file with the Scanner module 7. The cost of each scan will vary depending on a pricing function that relies on details obtained by analysing the spreadsheet file. For example, the number of line items, general complexity of the formulas (including the types of spreadsheet software functions used), the expected number of likely errors, and the level of change from the previous scan (if any) are taken into account by the Pricing module 8. The module can store a table including the unit cost for each line item, for example, and then multiply the number of potential line items by the unit cost. The cost information is then displayed on the screen of the PC 1 and the user is given the option of whether he wants to continue with scanning the spreadsheet data file using the Scanner module 7. If the user indicates that he does wish to continue then at step 24 the spreadsheet data is passed to the Scanner module 7 for processing. At step 25 the data resulting from the scan of the spreadsheet file by the Scanner module can be used by the user with one or more of the Viewer, Reporter, Comparator or Rewriter modules 9 - 12.

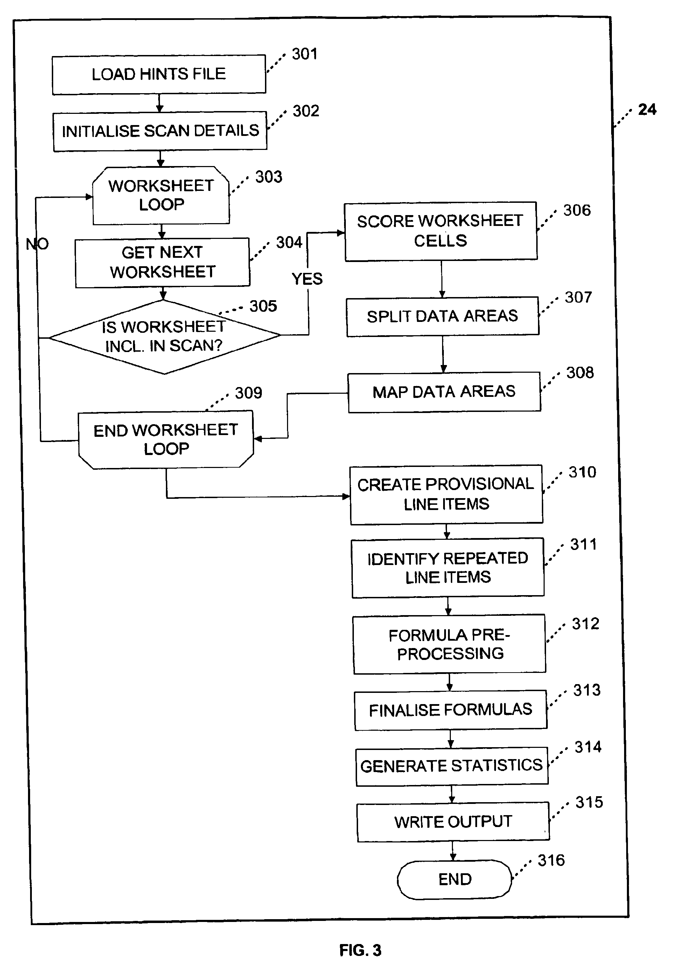

Figure 3 outlines the processing steps executed by the Scanner module 7 at step 24 of Figure 2. At step 301 the Scanner module receives data from a "hints" file. This file contains weighting data used to score cells on worksheets (as will be described below) and identifies any worksheets that the user may have elected not to have scanned (to reduce price, amount of information, etc).

At step 302 information relating to the scanning of the spreadsheet data file is initialised. This involves recording the current date and details from the spreadsheet data file, for example, its file name, file size, file author etc as well as log-in details of the user requesting the scan.

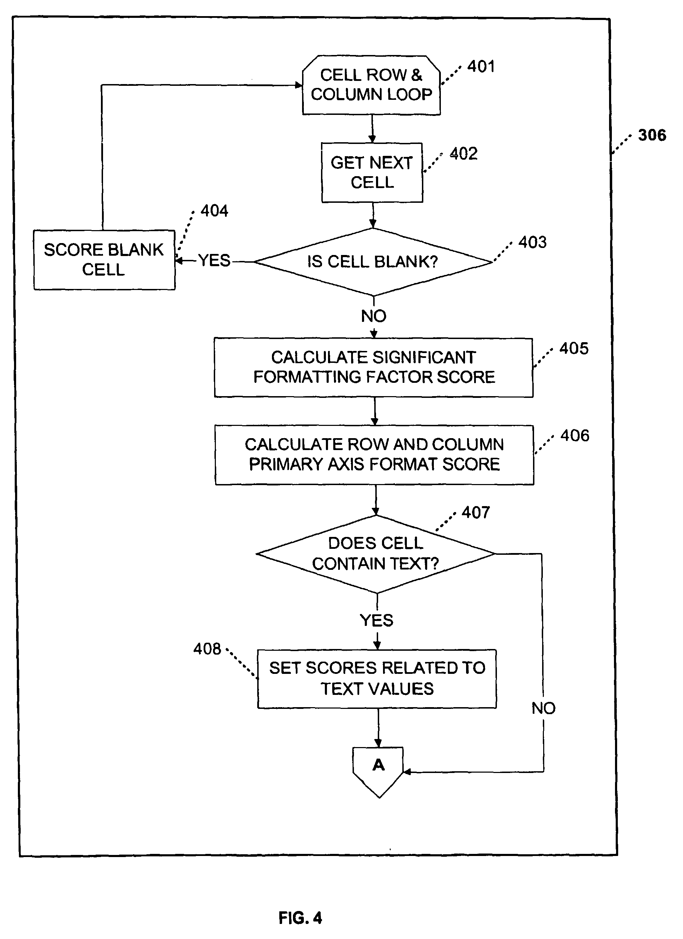

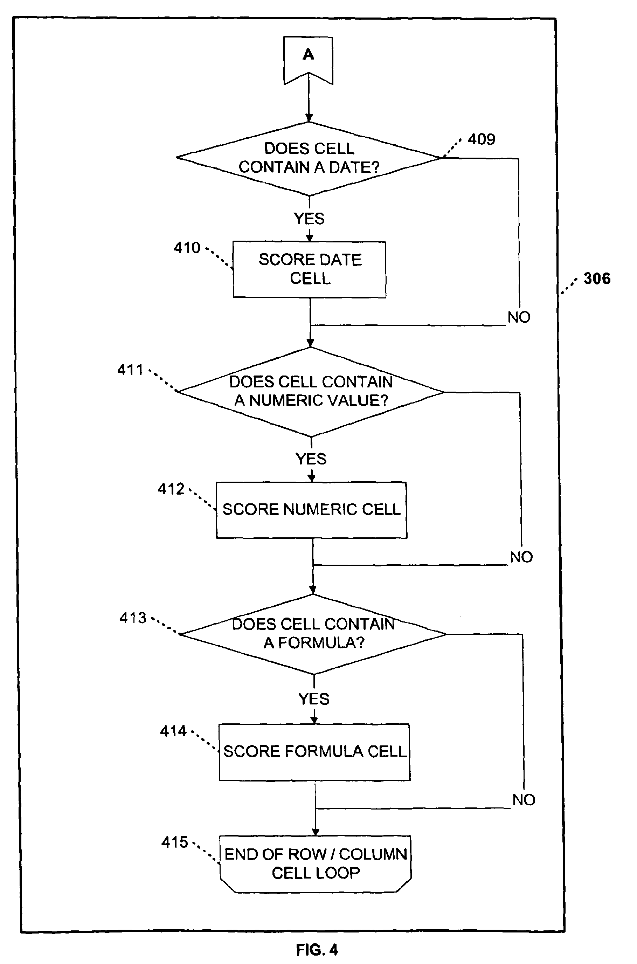

Step 303 denotes the beginning of a loop of steps performed on each worksheet. In the first step 304 of the loop the first/next worksheet to be processed is selected and at step 305 a check is performed as to whether the worksheet has been identified at step 301 as one which is to be excluded from the scan. If the worksheet is to be excluded then control passes back to the start of the loop step 303, otherwise at step 306 each cell in the worksheet is read and is assigned scores for data area determination. The processing and terminology involved in steps 306 to 315 will be described in more detail below with reference to Figures 4 to 20.

At step 307 the worksheet scoring is analysed to determine whether the worksheet needs to be split into more than one (provisional) data area. A data area can be thought of as a range of cells defined with similar positional information and may share labelling. For example, each of the line items within a data area will generally be arrayed in parallel (say all row-wise) and to the extent there are series variables they will share the same series definition (e.g. semi-annual dates located in a common header row).

At step 308 the Scanner module determines the likely characteristics of cell data in the indentified data area(s). This determination is based on the scores of the cells within each data area.

Control is then passed to step 309 which denotes the end of the worksheet loop. If there are more worksheets in the spreadsheet to be processed then control is passed back to step 303, otherwise the process of creating provisional line items commences at step 310. This involves processing each line (which can be a row or column) of cells in the data areas identified in the earlier steps. Model line items are created for all data found at this stage; however, some of these line items may not actually be written to the output file by the Scanner module as will be described below.

At step 311 the Scanner module identifies repeated (i.e. substantially identical) line items and "dead label call-ups". Dead label call-ups can be thought of as call-up line items having labels that are not set by pointers to the label of their source model line item. When such a line item is found then an error is logged, which can be reported to the user by the Viewer module 9 or the Reporter module 10.

At formula pre-processing step 312 each model line item (excluding call-up line items) with a formula has its cell-based formula converted into a line item formula. At step 313 the Scanner module analyses the formulas to record precedent line items and sets dependant line item references by one-to-one matching with each precedent inter-relationship.

At step 313 statistics relating to the scan of the spreadsheet are generated. This can involve logging information on the number of cells scanned, etc. At step 315 the Scanner module writes an output file containing data describing the spreadsheet scanned in terms of line items and then the Scanner module processing ends at step 316.

Steps involved in the worksheet cell scoring step 306 are shown in Figure 4. Step 401 denotes the start of a cell row and column loop sequence of steps in which each cell in the worksheet is processed in order.

Each cell is associated with a number of scoring variables representing various aspects indicative of the nature of the cell. The names of the scoring variables are given below in inverted commas.

At step 402 the first/next cell to be processed is selected and is checked at step 403 as to whether it is blank. If the cell is blank then at step 404 the "Blank" score variable of the cell is given a value of one and control passes back to the start of the row and column loop step 401. If the cell is not blank then its "Blank" score is set to 0 and at step 405 its "Significant Formatting Factor" score is calculated. This calculation takes into account underlining, italics, and abnormal font size of characters within the cell, which normally indicate the likelihood of the cell being used as a marker range. A marker range generally contains information (such as a series of dates) that will apply, and therefore convey meaning, to some or all of the line items in a data area.

At step 406 the "Row and Column Primary Access Format" score for the cell is calculated. This involves generating a numerical value depending upon whether there are border formats present at the top/left of the cell and if there are blank cells above and to the left of it.

At step 407 a check is performed as to whether the cell contains text. If so, then at step 408 various scores are set/incremented by evaluating certain criteria of text values. Such criteria include the length of the text (long length tending to indicate comments); the principal words being capitalised (often indicating line item labels); whether the words are units (this could be checked by means of looking up in a dictionary containing a list of units); the presence of words indicating likely marker range information (again, this could be achieved by looking up a dictionary of typical header words such as "units", "labels", "total", etc). If the text does not fit into any of these categories then the cell is given a "Text Values" score corresponding to "unknown text".

At step 409 the text of the cell is checked to see whether it contains a date. If it does then the "Date" score for the cell is calculated at step 410. This score is increased if the text corresponds to a standard format of a date (e.g. mm-dd-yyyy) or if it contains text that is typically used to identify periods of time, e.g. QTR1. Adjacent cells are also checked for indicators of a potential Time Series Range (TSR) (that is, the values associated with a line item vary over a time range at a specific frequency) or if the cell is part of a numeric series with a defined linear or exponential relationship. It will be understood that further relationships between numerical values could be identified and that detection of such relationships could be implemented in various ways, for example using neural network programming.

After step 410 (or if the check of step 409 indicates that the cell does not contain a date) a check is performed at step 411 as to whether the cell contains a numeric value. If the cell does contain a numeric value then at step 412 the "numeric" score of the cell is incremented, otherwise control immediately passes to step 413.

At step 413 it is checked whether the cell contains a formula. If so, then a "Formula" score for the cell is generated at step 414. Also the TSR score may be incremented as/if cells to the right/below or left/above contain equivalent formulas (i.e. whether the current cell seems to be part of a series). In spreadsheet terminology equivalent formulas are those that are replicated through a copy-paste sequence (i.e. 'copy across' a row or down a column). It is important that the TSR score be incremented only once for adjacent formula equivalency (noting the 'or' in the previous statement) such that cells on the edges of a series range have the same scores as those with elements on either side.

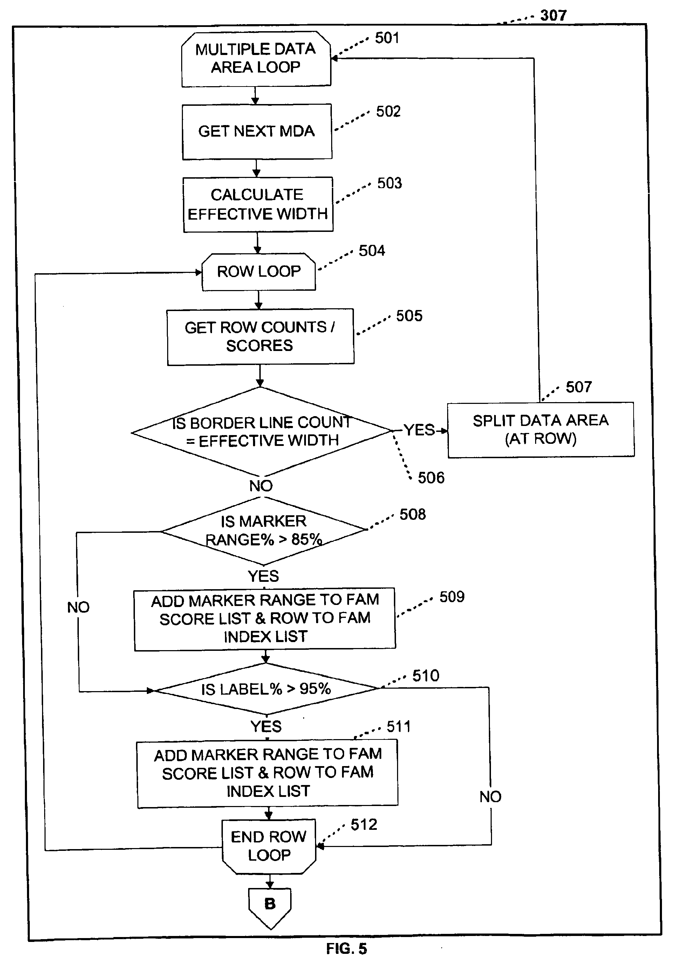

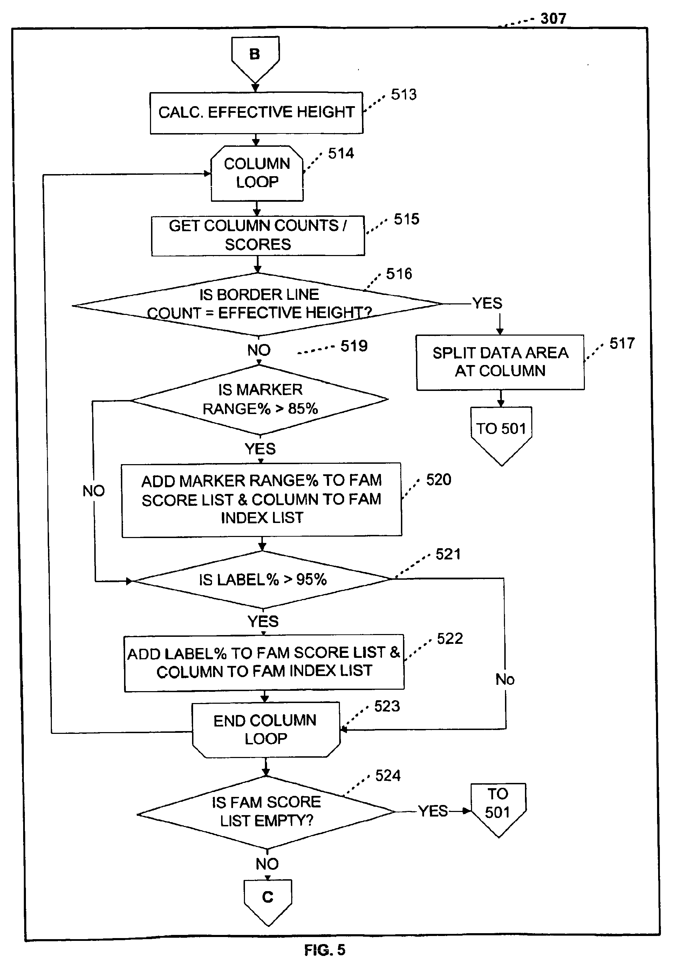

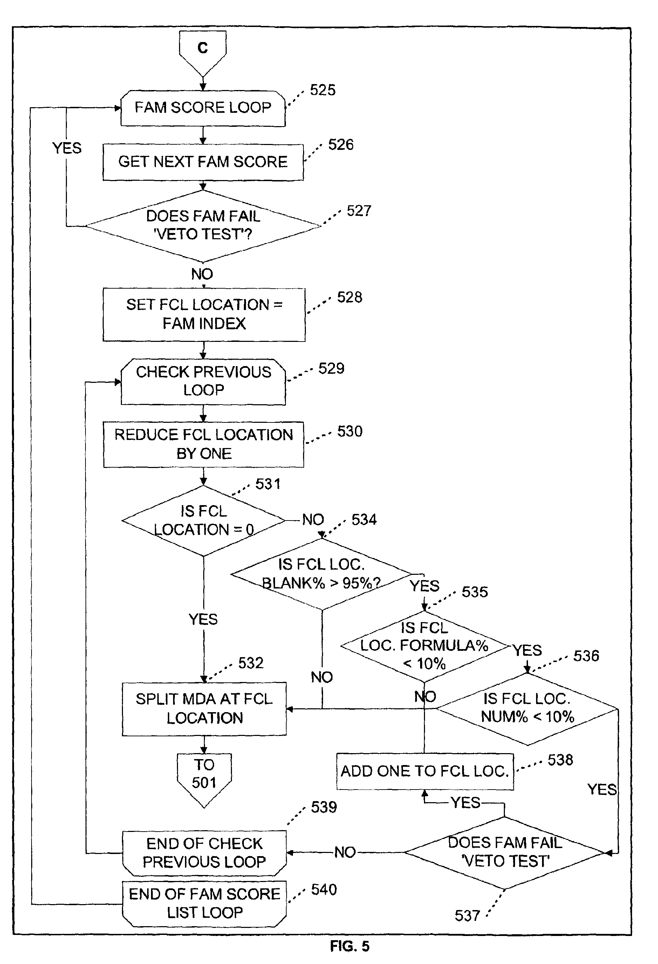

After step 414 (or if the check at step 413 indicates that the cell does not contain a formula) control is passed to step 415 which denotes the end of the row and column cell loop, and so if there are no more cells in the worksheet to be processed then the Scanner module continues at step 307, which is detailed in Figure 5.

Step 501 marks the start of a multiple data area loop sequence of steps which is intended to process all data areas within the spreadsheet data file that in turn may have more than one data area (i.e. are potentially multiple data areas or MDAs). Initially, the entire worksheet will be considered as a (single) provisional MDA. First, the MDA is searched for boundaries between rows or columns of cells along which it can be subdivided. If no such locations can be found then the MDA is considered to be a single data area and is not divided. However, if such locations are found then the data areas defined by the boundary of locations are then evaluated to see whether they in themselves can be further sub divided. It will be appreciated by those skilled in the art that these steps can be efficiently implemented by means of a recursive procedure.

The boundaries along which an MDA are split are called "cut lines", and in particular those cut lines that continue through an entire dimension (width or height) of an MDA known as Full Cut Lines (FCLs). Cut lines that continue through a dimension, but are interrupted by another perpendicular cut line at an intersection are also still valid FCLs.

FCLs are generally made apparent by pronounced deviations in particular scores of the cells on either or both sides of the relevant boundary. Rows or columns of cells that may indicate the presence of an FCL (nearby, though not necessarily adjacent) are called "FCL axis markers" (FAMs) and are typically denoted by a pronounced deviation in "Label" or "Marker Range" scores of the cells from which they are formed, or relevant scores of adjacent lines (e.g. whether such adjacent lines are predominantly blank or contain border formats).

At step 502 the first/next MDA to be processed is selected and its "effective width" is calculated at step 503. The effective width is calculated as the width of the MDA minus its left most and right most blank columns.

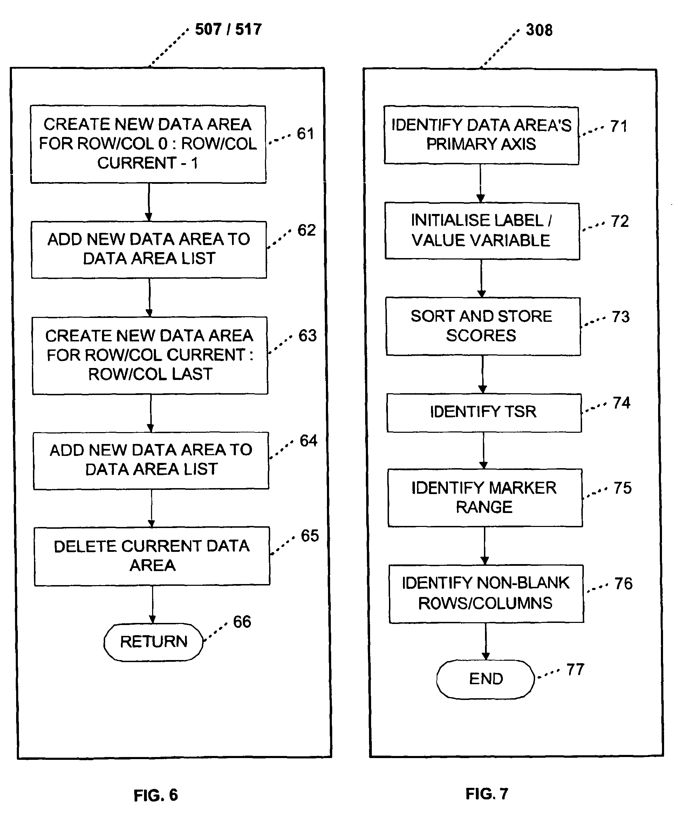

Step 504 marks the start of a row loop sequence of steps, the first of which is step 505. In this step the scores of the cells forming the row are obtained and at step 506 a check is performed as to whether the borderline count of the row is equal to its effective width. The borderline count of a row is defined as the number of cells on the row with any form of border format located on their top boundaries. If the result of this check is positive (i.e. a border line is detected across the effective width) then at step 507 a split data area procedure, described below with reference to Figure 6, is performed on the row and then control is passed back to the start of the MDA loop step 501.

If the result of the check performed at step 506 is negative, then control is passed to step 508 where the "Marker Range" score for the row is checked to see whether it is greater than 85%. As with the other percentages given below for procedure 307 85% is used as a representative threshold and the actual threshold can be obtained from the "hints" file loaded at step 301. If the Marker Range score is greater that the 85% threshold then at step 509 the Marker Range score is added to the FAM score list and the row is added to the FAM index list. The FAM score list stores potential FAM scores in descending order (i.e. the first element in the list is the largest) such that processing can split MDAs along those FCLs with the best/strongest scores first. The FAM index list is simply a list of locations corresponding to the relevant scores, which will be passed to the split MDA routines.

After step 509 (or if the result of the marker range check of step 508 was negative) control is passed to step 510 where the "Label" score of the row is checked to see if it is greater than 95%. If this is the case then at step 511 the marker range is added to the FAM score list and the row is added to the FAM index list.

After step 511 (or if the result of the label greater than 95% check of step 510 was negative) control is passed to step 512, which marks the end of the row loop. If there are no further rows to be processed in the data area then control is passed to step 513 where the effective height of the data area is calculated. The effective height is calculated as the height of the data area minus its top and bottom blank columns.

Step 514 marks the start of a column loop sequence of the steps, the first of which is step 515 where the column/scores for the first/next column in the MDA are obtained.

Steps 516 through 523 can be understood with reference to the description of Steps 506 to 512, recognising relevant replacements of row with column. The main point to be made is that a row in a row-wise data area is functionally equivalent to a column in a column-wise data area. If reducing programming lines were important, those skilled in the art will appreciate that essentially the same programming routines can be used for these steps, as long as such routines are passed information as to whether the row or column operation is being processed.

At step 524 the FAM score list is checked to see whether it is empty. If this is the case then control is passed back to step 501 so that the next MDA can be processed, otherwise control is passed to step 525.

Step 525 marks the start of a FAM score list loop sequence of steps. The first of these is step 526 where the first/next FAM score to be processed is obtained. The FAM is checked at step 527 to see whether it fails a "veto test". This test includes checks that will disqualify potentially FAMs, howsoever high they may have otherwise scored, that cross a line of equivalent formulas or a border, unless the latter is at what may be thought of as a 'four-way intersection'. In other words, it is not enough that a possible FCL shows evidence of continuing through a particular data area dimension. If in the process, it crosses over other indicators of a perpendicular FCL (in this case line of equivalent formulas or borders), then it is disqualified.

If the FAM fails the veto test then control is passed back to the start of the FAM score list loop step 525 (where the next highest scoring FAM is retrieved), otherwise control is passed to step 528.

At step 528 the Full Cut Line (FCL) location variable is set to the FAM index. The FCL location is a temporary variable which indicates the index number of the current boundary line (the line between rows/columns) being tested. A FCL index of n lies on the border between a FAM (i.e. row or column) of n and n + 1.

Step 529 marks the start of a check previous line loop sequence of steps, the first of which is step 530 where the FCL location variable is reduced by 1. At step 531 a check is performed as to whether the FCL location variable is equal to zero. If this is the case then control is passed to step 532 where the data area is split at the FCL location the procedure described below with reference to Figure 6 and control is then passed back to the start of the multiple data area loop 501.

If the FCL location is not equal to zero (indicating that the edge of the MDA has not been reached) then at step 534 a check is performed as to whether the FCL location blank score is greater than 95%. If this is not the case then control is passed back to step 532, otherwise at step 535 a check is performed as to whether the FCL location formula score is less than 10%. If this is not the case then control is passed back to step 532, otherwise at step 536 a check is performed as to whether the FCL location numeric score is less than 10%. If this is not the case then control is passed to step 532, otherwise at step 537 the "veto test" is performed on the FAM.

If the FAM fails the veto test, then at step 538 the FCL location variable is incremented by one and control is passed to step 532. If the FAM does not fail the veto test, then control is passed to step 539, which marks the end of the Check Previous loop. Step 540 marks the end of the FAM score list loop.

Figure 6 details the steps involved in the split data area procedure 507 or 517. At step 61 a new data area is created for rows/column 0 : row/column current - 1. (Here, the ":" symbol is used as in conventional spreadsheet software, i.e. separating the start and end of a range.) Then, at step 62 a new data area is added to the data area list. At step 63 a new data area for row/column current : row/column last is created and at step 64 a new data area is added to the data area list.

At step 65 the current data area is deleted and control is passed back at step 66 to the point from which the procedure 507 was called.

Figure 7 illustrates steps which can be performed during the data area mapping process 308. The first step 71 identifies the label axis of the data area being processed. This determines whether the data area is row-wise (i.e. the line items are arrayed along rows) or column-wise, depending upon certain scoring signals. This can be achieved for example by checking for a strong deviation in the "Label" score from amongst the "Column" scores, which would indicate potential labels arrayed in a column (hence a row-wise data area).

At step 72 the label/value variable for the data area is initialised. This is achieved by setting the location of key line item aspects (labels, values, units, etc.) depending upon the orientation of the label axis. For instance, a 'plateau' of numeric scores through a range of columns in a row-wise data area indicates likely range of values.

The scores for the data area are sorted and stored at step 73 (to indicate the order in which data will be extracted). This is done for each category of score, label, constant, TSR, etc.

At step 74 the characteristics of the definition of any/all series line items located in the data area are identified, for example time frequency, the span of time over which the line items are defined, etc.

The marker range of the data areas is identified at step 75. This is achieved by detecting strong 'spikes' in the marker range score (among row scores for a row-wise data area). As well as generally containing information defining the data area's series definition, the marker range provides column or row headings for later use in appending to line item labels. At step 76 non-blank rows/columns in the data area are identified before the data mapping process 308 ends at step 77.

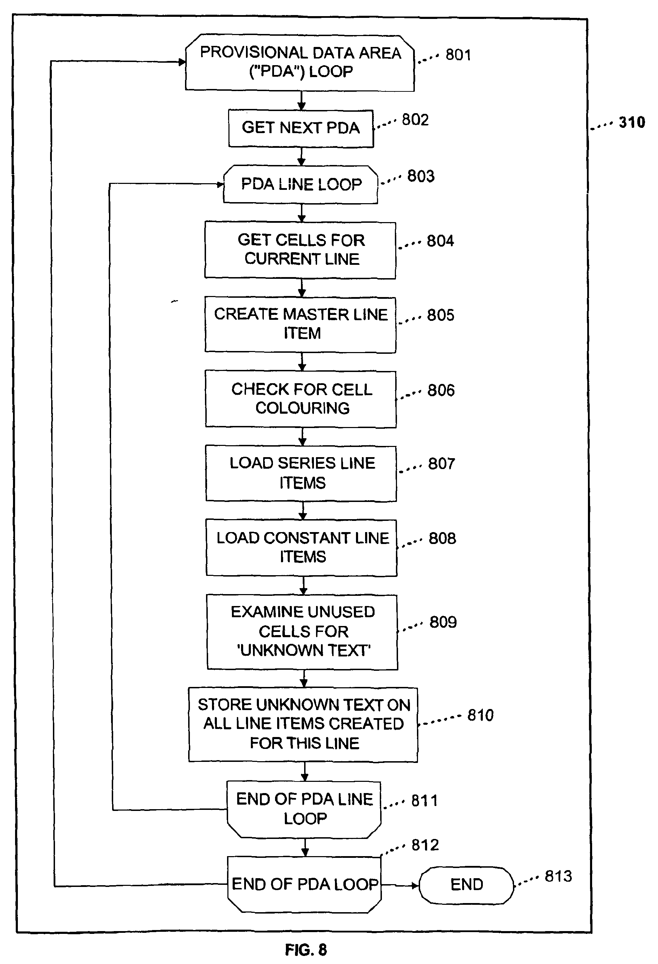

Step 310, where line item data is created, is detailed in Figure 8. Step 801 marks the start of a provisional data area (PDA) loop sequence of steps, the first of which is step 802. At this step the first/next PDA of the ones identified in steps 306 - 308 is selected for processing and at step 804 the cells for the current line (i.e. row or column) of the data area are obtained. At step 805 a master line item is created. The master line item acts as a template for line items created for the current line and includes: an identifier for the line item; a unique label; the units (if any); comments (if any) and a log of line formulas (i.e. formulas that relate only to elements within the current line item).

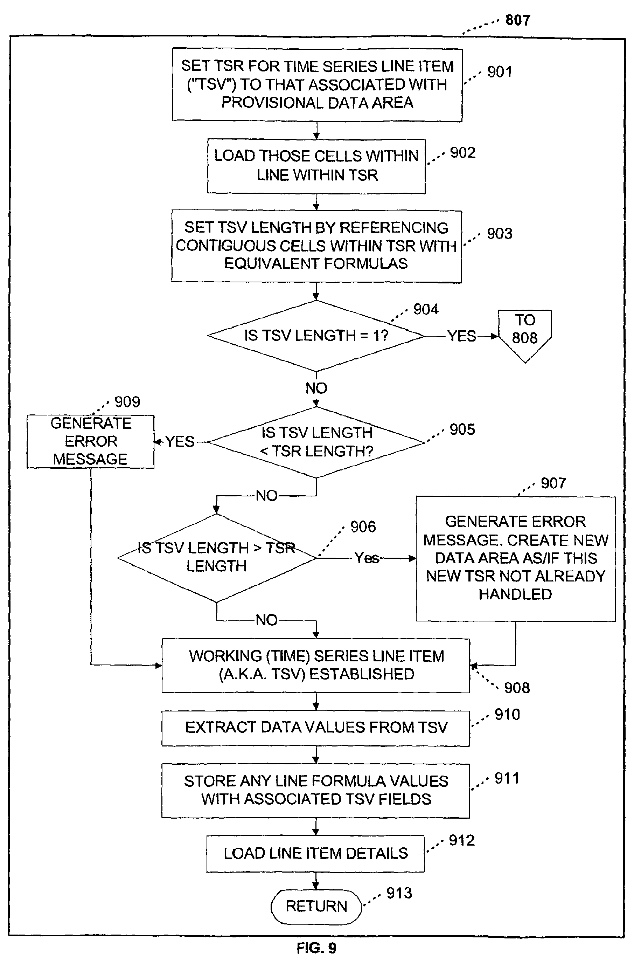

At step 806 data relating to any colour or hatch pattern formatting of the cell is collected. At step 807 (time) series line items data is loaded, as will be described with reference to Figure 9 below.

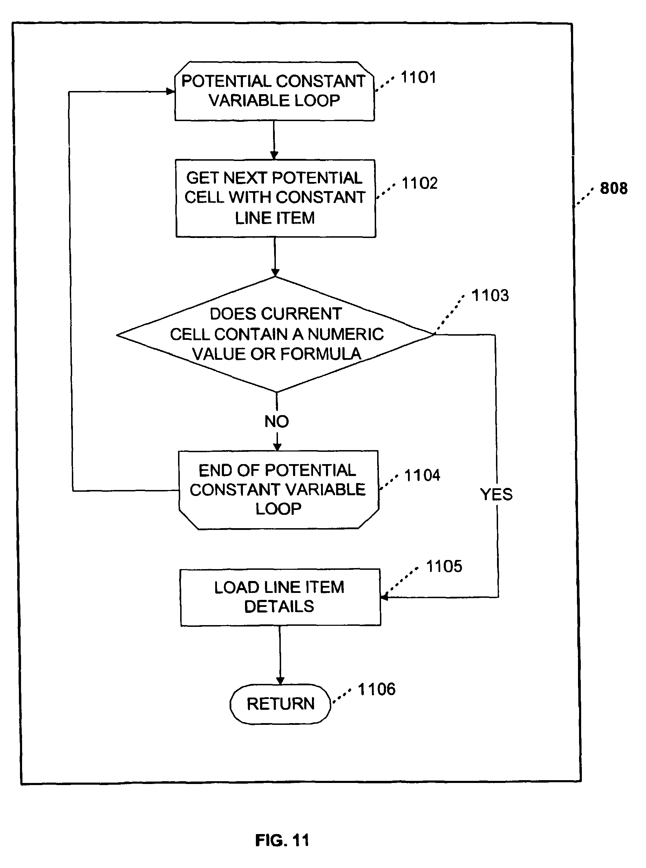

Constant line item data is loaded at step 808, which will be described with reference to Figure 11 below. At step 809 unused cells are examined for "unknown text". Unused cells are cells which have not been identified as part of either a series variable or a constant variable. As with the other information stored with the master 'template' line item described in Step 805, at step 810 "unknown text" is stored against all line items created for this line and control is then passed to step 811 which marks the end of the PDA line loop and so if there are no further PDA lines to process control is passed to step 812. Step 812 marks the end of the PDA loop and so if no further PDA's are to be processed the creation of provisional line item procedure ends at step 813.

Referring to Figure 9, the first step 901 of the load (time) series line items (TSVs) process 807 involves setting the series values for the TSV to that associated with the provisional data area. At step 902 the cells on the TSV's line that are positioned within the data area's TSR are loaded, and at step 903 the TSV's series length is set by referencing contiguous cells within the TSV with equivalent formulas (starting from among those cells within the data area's TSR). This means that the length of the TSV's series values is determined as the greater of the formula cells within the data area defining the TSR and the cells with an equivalent formula on the current line.

At step 904 a check is performed as to whether the length of the TSV is 1. If this is the case then the loading of the time series item process 807 ends and control is passed back to step 808. If the length is not equal to one then at step 905 a check is performed as to whether the TSV length is less than the TSR length. If this is not the case then a further check is performed at step 906 to see whether the TSV length is greater than the TSR length. If this is the case then at step 907 an error message ("time series line item extends beyond data area's defined TSR") which can be displayed by the Reporter module 10, for example, is generated and a new data area created as/if this new TSR has not already been handled.

If the result of the check of step 905 as to whether the TSV length is less than the TSR length is positive then at step 909 an error message ("time series line item does not span full range of data area TSR") is generated and control is passed to step 908. Control is also passed to step 908 after step 907 or if the result of the check of step 906 is negative.

At step 908 a working time series line item is established and at step 910 data values are extracted from the time series line item. After this, any line formula values with associated TSV fields are stored at step 911. A line formula is a formula operating only on the TSV for the current line using a single function (e.g. SUM, MAX, MIN, AVERAGE).

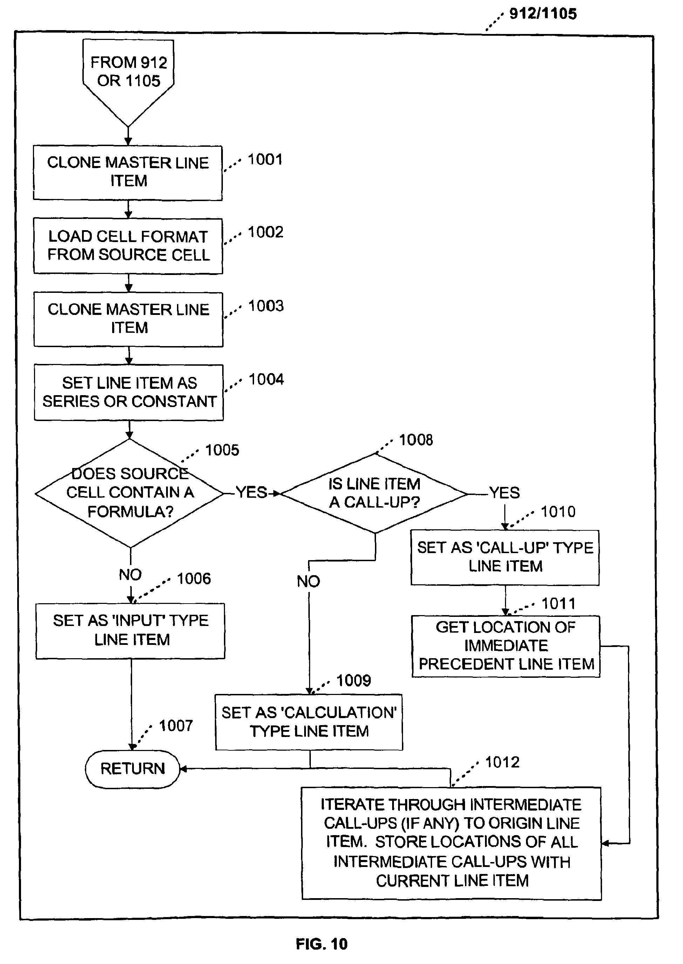

At step 912 line item details are loaded, as described with reference to Figure 10 below and then at step 913 the load time series line item process 807 ends.

The first step 1001 of Figure 10 involves cloning of the master line item, which means that the label is set as if the first occurrence counted on the current line had not occurred. At step 1002 the cell format from the source cell is loaded and the line item is cloned at step 1003.

At step 1004 the line item is set as a series or constant, depending upon whether the load line items procedure was called after step 904 or step 1105 (described below).

At step 1005 a check is performed as to whether the source cell contains a formula. If this is not the case then at step 1006 the type of the line item is set to "Input" and at step 1007 control is passed to the point from which the procedure 912 was called.

If the source cell contains a formula then at step 1008 a check is performed as to whether the line item is a call-up. If this is not the case then at step 1009 the type of line action is set to "Calculation" and the procedure returns at step 1007.

If the line item is a call-up then control is passed to step 1010. A line item is considered to be a call-up if it satisfies any of the following conditions:
- The formula in the source cell is consistent with the syntax "= < cell reference >".
- The formula presents equivalent formulas (i.e. formulas that copy across/down) throughout the TSR. General equivalency does not include the label and therefore for call-ups further checks have to be performed as described below.
- The line item has a label valued that is "materially similar" (as defined below) as its single precedent record.
- If the label is returned by a formula, it is an equivalent formula to the anchor formula.
- If the line item has a time offset of zero with a single precedent record.
- The potential call-up line item does not contain any additional "ancillary information", such as shading, cell comments, other text etc. However, a different numeric format will not disqualify it as a call-up.

"Materially similarly labels" are generally ones which would be interpreted by a human reader as meaning the same thing but would not match identically via a simple string comparison. It will be appreciated that various algorithms can be implemented to test for such similarities. Examples of the operations that can be performed are given below:
■ Labels can be conformed to have single spaces between words and no leading or trailing spaces.
■ Most or all separation characters (e.g. dash, comma etc) can be stripped.
■ Dictionary look-up could be provided to enforce synonymous words. This could also include abbreviations, e.g. percent symbol versus the word "percent".

At step 1010 the type of the line item is set as "Call-up" and at step 1011 the location of the immediately precedent line item is obtained. At step 1012 the process iterates back through intermediate call-ups (if there are any) to the origin line item (either of "Input" or "Calculation" type). The locations of all intermediate call-ups are stored with the current line item.

Intermediate call-up locations are reprocessed later to "move" all call-up locations to be stored with the origin line item in the final processing steps described below. Following this, the procedure returns control to the point from which it was called.

Referring to Figure 11, the first step 1101 of the load constant line item process 808 marks the start of a potential constant variable loop sequence of steps. At step 1102 the next potential line item with a "Constant" line item type is obtained. This determination is based on worksheet cell scores and checking whether any cell within a row or column has a positive numeric score.

At step 1103 a check is performed as to whether the current cell contains a numeric value or formula. If it does not then control is passed to step 1104, which marks the end of the potential constant variable loop, otherwise control is passed to step 1105, which invokes the load line item details process of Figure 10. After this, at step 1106 the procedure 808 returns control.

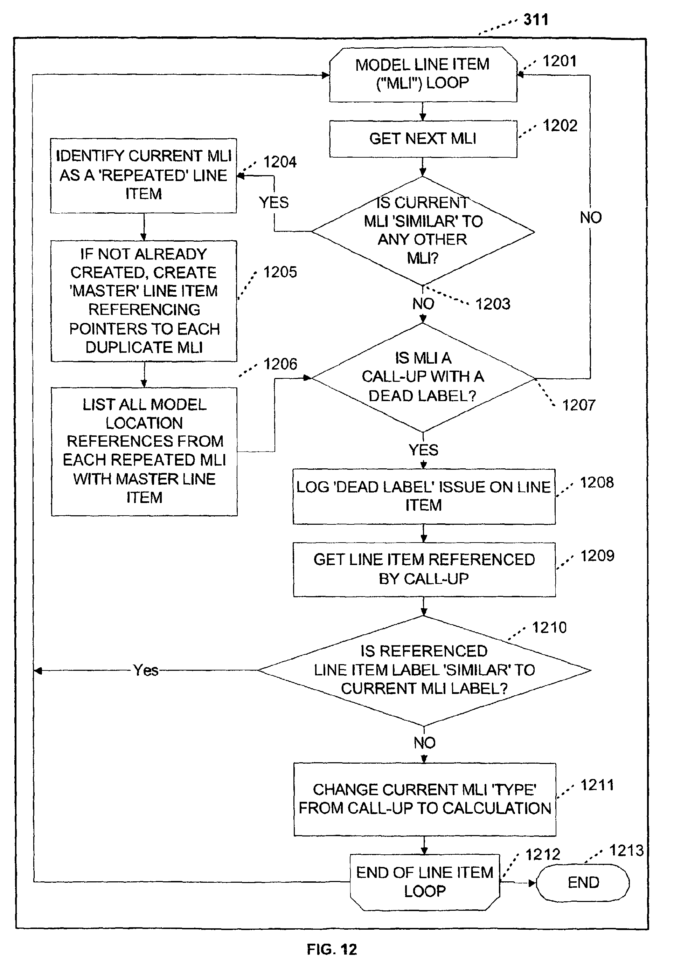

The identification of repeated line items and "dead label" call-ups process 311 is detailed in Figure 12. The first step 1201 of this process marks the start of a model line item (MLI) loop sequence of steps, the first of which is step 1202. At step 1202 the first/next MLI is selected and at step 1203 a check is performed as to whether the selected MLI is "similar" to any other MLI. Two or more MLI's can be compared to each other and classified in a 3 by 3 matrix as to whether their labels and formulas are classed as being identical, similar or materially different. Comments and potential error messages or notations can be as illustrated in the table below:

| | **Formula is...** | | |
|---|---|---|---|
| **Label is...** | Identical | Similar | Materially Different |
| Identical | Only entirely 'valid' as/if Formula is a Call- up (single cell reference). | "Two or more Line Items with identical labels are calculated in the Model, with functionally equivalent expressions, but not identical." | "Two or more Line Items exist with identical Labels (but non-equivalent formulas). Though this may not indicate an error at present, this is a confusing construct that could lead to future error. |
| | Otherwise, error report that "Line Item is calculated more than once within the Model. | "If Line Items are intended to be the same, then a Call-up structure should be adopted (see Help), or at a minimum formula expressions should probably be conformed." | Labelling should be amended to clarify the difference indicated by the formulas." |
| | A Call-up structure would be preferred (see Help)." | | "If Line Items are intended to be the same, then a Call-up structure should be adopted (see Help), or at a minimum formula expressions should probably be conformed." |
| Similar | "Two or more Line Items exist with similar Labels and identical formulas. | "Two or more Line Items exist that appear to have similar labels and functionally equivalent formulas." | "Two or more Line Items exist with potentially similar Labels. Clarifying the labelling may be useful to prevent (future) error." |
| | "If Line Items are intended to be the same, then a Call- up structure should be adopted (see Help)." | "If Line Items are intended to be the same, then a Call-up structure should be adopted (see Help), or at a minimum formula expressions should probably be conformed." | |
| Materia lly Differe nt | "The following Line Items appear to have materially different Labels, but identical formulas. It may be prudent to conform the model logic to use only one of these Line Items." | "The following Line Items appear to have materially different Labels, but functionally equivalent formulas. It may be prudent to conform the model logic to use only one of these Line Items and/or conform the formulas to identical expressions." | No problem. High confidence that new/ different SLIs warranted. |

If the current MLI is considered "similar" to another MLI then at step 1204 the current MLI is identified as a "repeated" line item. At step 1205 a master line item referencing pointers to each duplicate MLI is created if such a master line item has not already been created. At step 1206 all model location references from each repeated MLI with a master line item is listed.

After step 1206 (or if the current MLI is not "similar" to any other MLI) control is passed to step 1207 where a check is performed as to whether the MLI is a call-up with a dead label. A "dead label" is any label entered as a fixed text string, as opposed to a formula reference to a text string associated with the label of another MLI. If the result of this test is negative then control is passed back to the start of the MLI loop at step 1201, otherwise control is passed to 1208.

At step 1208 the line item is logged as having a "dead label" issue and at step 1209 the line item referenced by the call-up of the model line item is obtained.

At step 1210 a check is performed as to whether the reference line item label is "similar" to the current MLI table. This comparison is substantially identical to that performed at step 1207. If the result of the test is positive then control is passed back to the start of the model line item loop step 1201, otherwise step 1211 is invoked.

At step 1211 the type of the MLI is changed from "Call-up" to "Calculation" and control passes to step 1212, which marks the end of the line item loop, and so control can then be passed back to step 1201. Control is also passed back to step 1201 if the reference line item is "similar" to the current MLI label. After the line item loop has finished, the process 311 ends at step 1213.

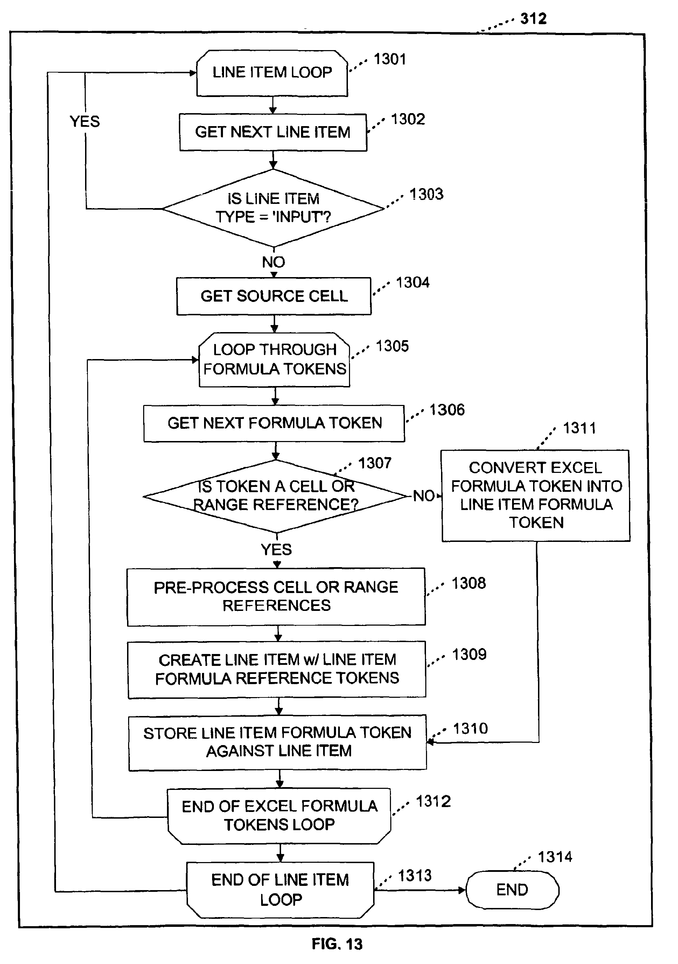

Figure 13 illustrates the steps involved in the formula preprocessing procedure 312. The first step 1301 marks the start of a line item loop sequence of steps. At step 1302 the first/next line item to be processed is selected and at step 1303 a check is performed as to whether the type of the line item is "Input". If this is the case then control passes back to the start of the loop step 1301, otherwise step 1304 is invoked. At step 1304 the source cell for the line item is obtained. The source cell is the location from which the formula of the line item is drawn. Step 1305 marks the start of a "loop through formula tokens" sequence of steps, the first of which is step 1306, where the first/next formula token to be processed is selected.

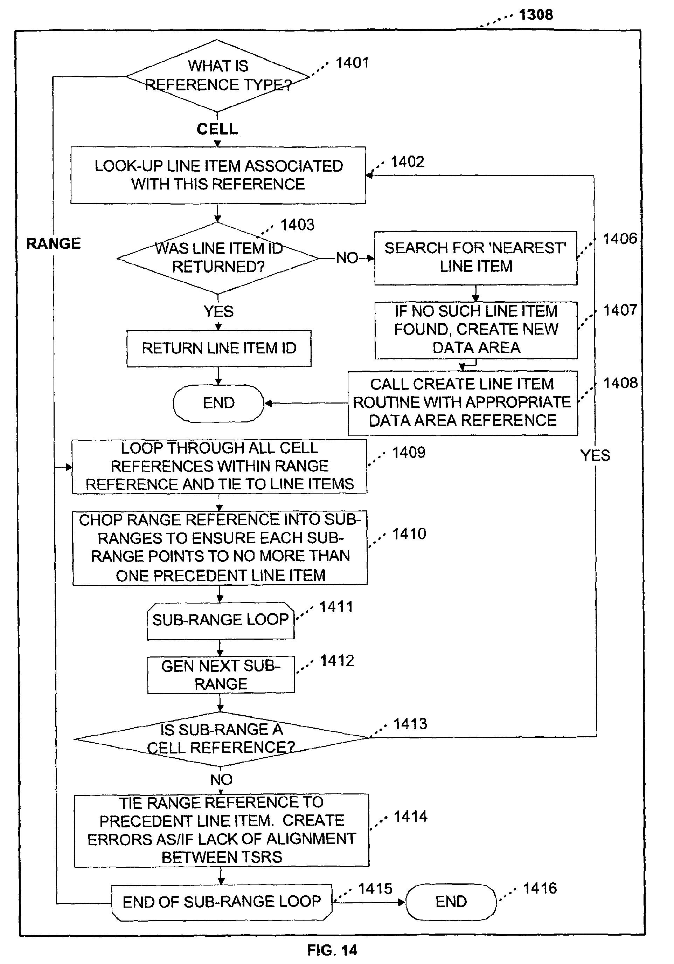

At step 1307 a check is performed as to whether the token is a cell or range reference. If it is then at step 1308 cell or array references are preprocessed to work out to which line item(s) a cell or range reference points. This procedure will be described below with reference to figure 14.

At step 1309 a line item with a line item formula reference token is created and at step 1310 the line item formula token is stored against the line item.

If the check relating to the token being a cell or a range reference performed at step 1307 has a negative result then at step 1311 the spreadsheet formula token is converted into a line item formula token. For non-cell/range references (e.g. function, arithmetic operators, fixed constants) the strings are set to ones which look like the formulas visible in the spreadsheet software. Control is then passed on to step 1310.

Step 1312 marks the end of the formula tokens loop and so if there are no more formula tokens to process control is passed on to step 1313, which marks the end of the line item loop. When there are no more line items to process the procedure 312 ends at step 1314.

Referring to Figure 14, the first step 1401 of the preprocessing procedure 1308 checks the type of the reference passed to the procedure. If the type is "Cell" then at step 1402 the line item associated with the reference is obtained. After this a check is performed at step 1403 as to whether a line item identifier was returned. If this was the case then at step 1404 the line item identifier is returned as the result of the procedure 1308 and at step 1405 and the procedure returns control.

If a line item identifier was not returned then at step 1406 a search is performed for the "nearest" line item. This determines the retrospective association with the existing line item and/or data area. At step 1407 a new data area is created if no such associated data area was found. At step 1408 the create line item routine with appropriate data area references is invoked, see step 807 or 809 as appropriate. The procedure 1308 then ends at step 1405.

If the reference type check of step 1407 indicates that the type is "Range" then at step 1409 the procedure loops through all cell references within the range reference and ties them to the line items. At step 1410 the range reference is chopped into sub ranges to ensure that each sub range points to no more than one precedent line item.

Step 1411 marks the start of a sub range loop sequence of steps, the first of which is step 1412 where the first/next sub range to be processed is obtained. At step 1413 a check is performed as to whether the sub range is a cell reference. If this is the case then control is passed back to step 1402, otherwise control is passed to step 1414.

At step 1414 the range reference is tied to the precedent line item. Error messages are also created if there is a lack of alignment between the time series ranges of the current and precedent line items.

Step 1415 marks the end of the sub range loop and if there are no more ranges to process then the procedure 1308 ends at step 1416.

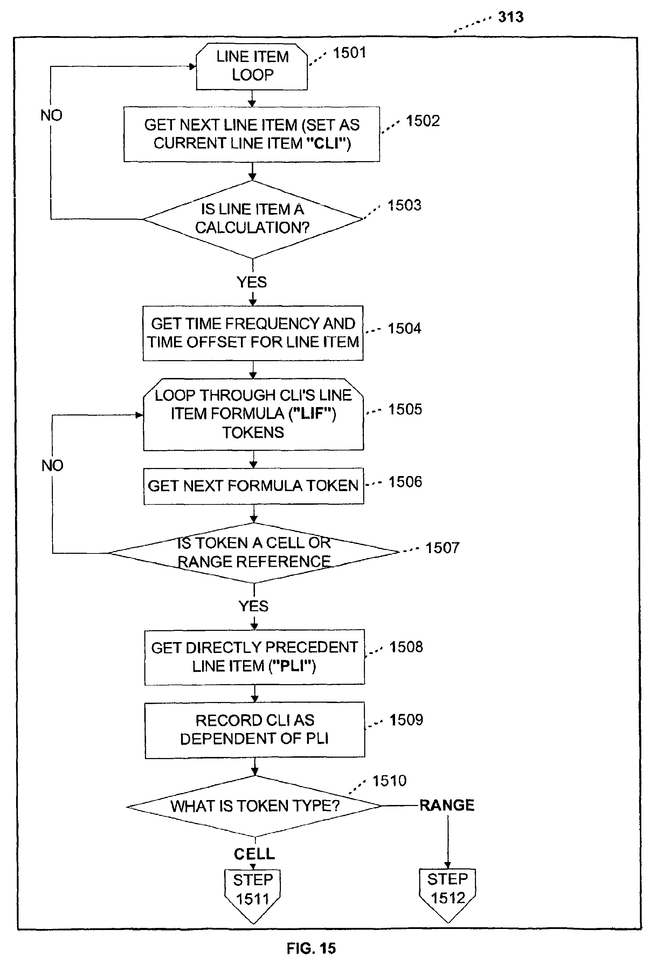

The steps involved in the finalise formulas step 313 are detailed in Figure 15. Step 1501 marks the start of a line item loop sequence of steps, the first of which is step 1502, where the first/next line item to be processed is selected.

At step 1503 a check is performed as to whether the line item is of the "Calculation" type. If this is not the case then control passes back to the start of the loop step 1501, otherwise step 1504 is invoked.

At step 1504 the time frequency and time offset for the line item being processed is obtained from the associated data area information. Step 1505 marks the start of a line item formula tokens loop sequence of steps, the first of which is step 1506 where the first/next formula token to be processed is selected.

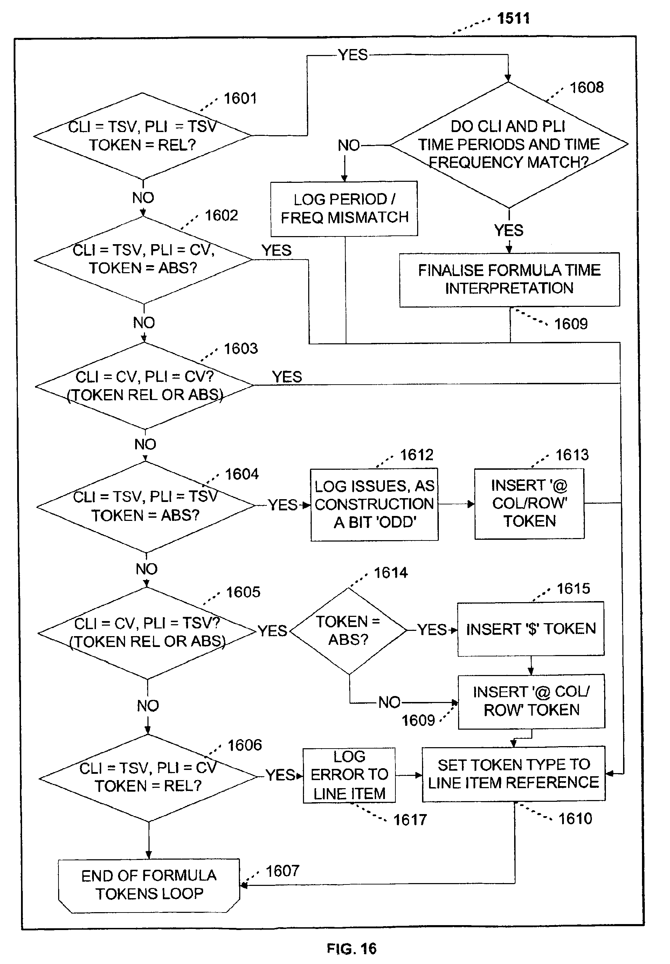

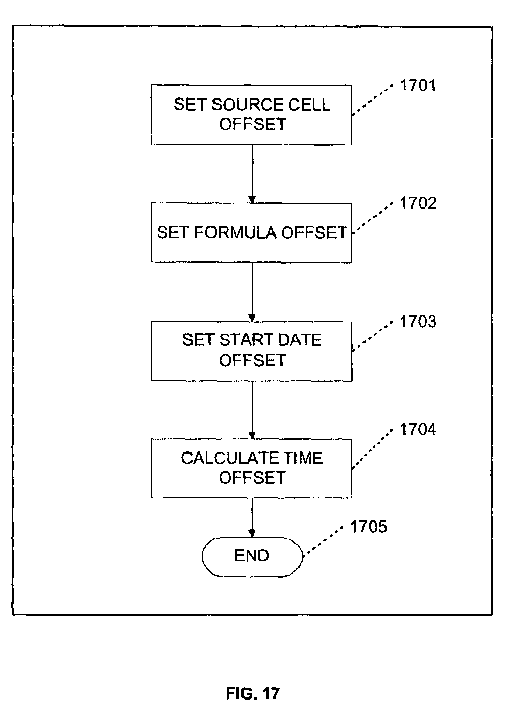

At step 1507 a check is performed as to whether the token is a cell or a range reference. This can affect whether the location reference is relevant for the final interpretation of the formula. If the result of the test is negative then control passes back to step 1505, otherwise at step 1508 the directly precedent line item is selected. At step 1509 the current line item is recorded as a dependant of the precedent line item and the type of the token is checked at step 1510. If the type of the token is "Cell" then step 1511 is invoked. The actions performed at step 1511 will be described below with reference to Figure 16. If the type of the token is "Range" then step 1512 is invoked. This step will be described with reference to Figure 17 below.

Referring to Figure 16, steps 1601 to 1606 represent six checks which may be performed for each line item formula. Each of these checks evaluates combinations of up to three aspects of the current line item, the precedent line item, or the reference token, specifically:
1. whether the current line item (CLI) is a TSV or constant line item (CV). The former contains a series of values (e.g. a line item like Revenues), which the latter has a single value (e.g. the total of all revenues).
2. whether the precedent line item (PLI) is a TSV or a CV; and
3. whether the reference token is relative (rel) or absolute (abs).

If the result of the first test 1601 is negative then the second test 1602 is performed; if the result of that test is negative then the third test 1603 is performed, and so on.

Step 1601 checks whether the current line item is a TSV; whether the precedent line item is also a TSV and also if the formula token is relative. A relative reference is true for any reference with any element unanchored on the axis of the current line item. If the result of this test is positive then at step 1608 a check is performed as to whether the time periods and time frequency of the current line item and precedent line item match.

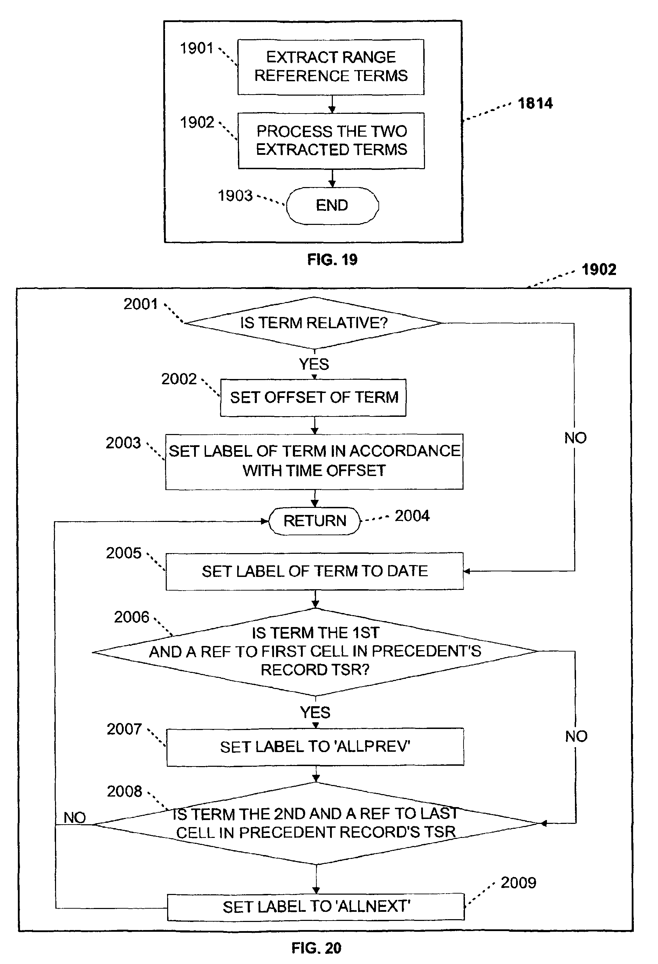

If the series definitions do match, then the formula time interpretation for cell references is finalised by assigning expressions based upon time offset (TO) calculated in accordance with Figure 19 below. Prior to passing control to 1610 (where the reference is replaced with the reference to the precedent line item), at Step 1609 parameters are set to effect the following outcomes based on the value of TO:
0: Control passed to 1610 with no changes (i.e. reference will ultimately be replaced with the Label of the precedent line item (PrecLabel);
-1: Reference replaced with PREV(PrecLabel)
<-1: Reference replaced with PREV(PrecLabel, -1 * TO)
+1: Reference replaced with NEXT(PrecLabel)
>+1: Reference replaced with NEXT(PrecLabel, TO)

Control is then passed on to step 1610 where the token type is set to "line item reference". Control is then passed on to step 1607, which marks the end of the formula tokens loop (started at step 1505).

If the check of step 1608 indicates that the time period and time frequency of the current line item and precedent line item do not match then at step 1611 a period/frequency mismatch is logged and control is then passed on to step 1610. Though not detailed, it is at this processing stage that certain functions designed for such mismatches (e.g. SUMIF, HLOOKUP) could be identified and analysed.

The test of step 1602 checks whether the current line item is a TSV; whether the precedent line item is a CV and whether the token is absolute. If the result of this test is positive then control is passed on to step 1610.

The test of 1603 checks whether the current line item is a CV and whether the precedent line item is also a CV (regardless of whether the token is relative or absolute). If the token is absolute then a "$" symbol is inserted (a customary indicator of an absolute reference) before control is passed on to step 1610.

The test of step 1604 checks whether the current line item is a TSV; whether the precedent line item is also a TSV and whether the token is absolute. If this is the case then an "issue" is logged as the Scanner module considers that the construction of the formula is unusual. At step 1613 a "@ column/row" token is inserted, denoting that the relationship between the current line item and the precedent line item is at a specific date (i.e. not a relative offset) and control is passed to step 1610.

The test of step 1605 checks whether the current line item is a CV and whether the precedent line item is a TSV (regardless of whether the token is relative or absolute). If this is the case then at step 1614 a check is performed as to whether the token is absolute. If this is the case then a "$" token is inserted. After step 1615 (or if the result of the test of step 1614 is negative) step 1616 is invoked where a "@ column/row" token is inserted and then control is passed on to step 1610. The "@" symbol indicates "at a particular point in the series" and the column/row reference may later be substituted with the relevant descriptor at this point in the Marker Range (e.g. a particular date).

The test of step 1606 checks whether the current line item is a TSV; whether the precedent line item is a CV and whether the token is relative. If this is the case then at step 1617 an error is logged for the line item and control passes to step 1610.

Figure 17 describes calculation of the 'time offset' between two references (and their affiliated line items). This procedure can be called from step 1609 or step 2002 described below. The first step 1701 sets the source cell offset equal to the column/row number axis number of the source cell of the current line item less the column/row number of the source cell of the precedent line item. This establishes the degree of 'alignment' between current and precedent line items related to the positions of their respective source cells on the relevant worksheets.

At step 1702 the formula offset is set to the column/row number of the source cell of the current record less the column/row number associated with the column/row address.

At step 1703 the start date offset is set to be equal to the number of periods between the source cell date of the current record and the source cell date of the precedent record.

At step 1704 the time offset is calculated by setting it as the source cell offset less the formula offset less the start date offset. The time offset is then returned to the calling procedure (Step 1609 or 2002 as relevant).

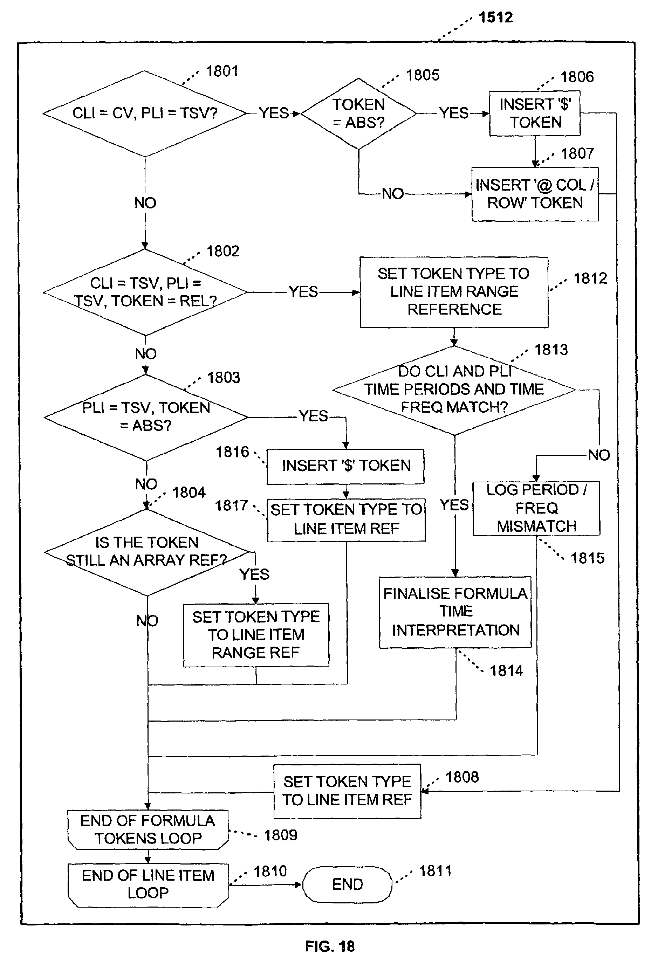

Figure 18 details the steps of the finalise range reference procedure 1512. Steps 1801 to 1804 are tests which may be performed on the token. If the result of the test 1801 is negative then the second test 1802 is performed and so on.

The test 1801 checks whether the current line item is a CV and whether the precedent line item is a TSV. If this is the case then at step 1805 a test is performed as to whether the token is absolute. If this is the case then at step 1806 a "$" token is inserted to indicate an absolute reference. After step 1806 (or if the token is not absolute) step 1807 is invoked. At this step a "@ column/row" token is inserted and control is passed to step 1808, where the token type is set to point to the precedent "Line Item Reference".

After step 1808 control is passed to step 1809, which marks the end of the end of the formula token loop started at step 1505. If there are no further formula tokens to process then control is passed on to step 1810, which marks the end of the line item loop started at step 1501. If there are no further line items to process then the procedure 1512 ends at step 1811.

The test of step 1802 checks whether the current line item is a TSV; whether the precedent line item is a TSV and whether the token is relative. If this is the case then at step 1812 the type of the token is set to point the precedent "Line Item Reference". At step 1813 a check is performed as to whether the time periods and time frequency (or more generally series definitions) of the current line item and the precedent line item match. If this is the case then at step 1814 the finalised formula time interpretation for range references step 1814 is carried out (described with reference to Figure 19 below).

If the result of the test of step 1813 is negative then at step 1815 a period/frequency mismatch error is logged at step 1815 and control passes to step 1809.

The test of step 1803 checks whether the precedent line item is a TSV and whether the token is absolute. If this is the case then at step 1816 a token is inserted and at step 1817 the type of the token is set to "Line Item Reference". Control is then passed on to step 1809.

The test of step 1804 checks whether the token is still an array reference. This is intended to pick up any current/reference combination missed. If the result of the check is positive then at step 1818 the token type is set to "Line Item Range Reference" and control is then passed on to step 1809.

Referring to Figure 19, the first step of the finalised formula time interpretation procedure for range references is step 1901, where the range reference terms are extracted. The first term is the first/left cell reference in the range references, whilst the second term is the second/right cell reference in the range references. At step 1902 the two extracted terms are processed in accordance with the steps described below with reference to Figure 20.

The procedure 1814 then ends at step 1903 and control is then passed to step 1809.

Referring to Figure 20, the first step 2001 of the term processing procedure 1902 involves checking whether the term is relative. If this is the case then at step 2002 the time offset of the term is calculated in accordance with steps described with reference to Figure 17 above.

At step 2003 the term label is set in accordance with the time offset (TO) as follows:
0: CURR
<0: PREV, -1 * TO
>0: NEXT, TO

After this, the procedure returns at step 2004.

If the result of the check of step 2001 regarding whether the term is relative is negative (i.e. the term is absolute), then at step 2005 the label for the term is set to the date, where the date is the date related to the location of the term in the TSR of the precedent record, expressed using the spreadsheet numeric format drawn from the cell corresponding to the source cell's position in the precedent line item's data area marker range.

At step 2006 a check is performed as to whether the term being processed is the first term and whether it is a reference to the first cell in the TSR of the precedent record. If this is the case then at step 2007 the label of the term is set to ALLPREV, otherwise control is passed to step 2008. At step 2008 a check is performed as to whether the term being processed is the second term and whether it is a reference to the first cell in the TSR of the precedent record. If this is the case then the label of the term is set to ALLNEXT.

After step 2007 or step 2009, the procedure 1902 returns at step 2004.

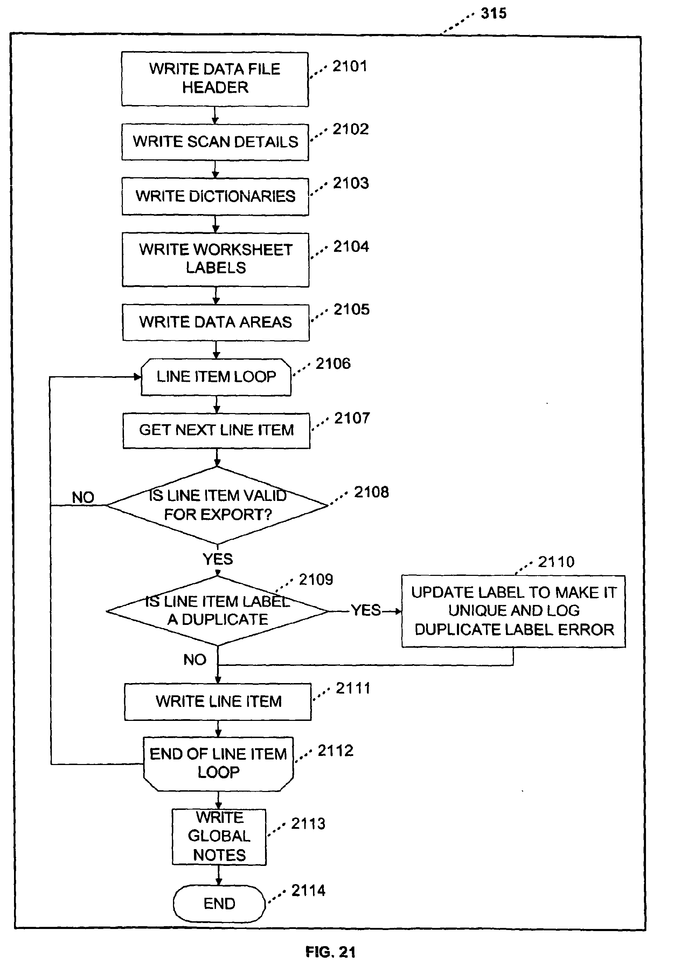

Figure 21 details the steps involved in the write output step 315. At step 2101 the header of the data file is written and at step 2102 details of the scan are written into the file. This includes the information obtained at step 302.

At step 2103 dictionaries are written to the file. The dictionaries include word lists that are cross-linked to keys to save space and improve efficiency. At step 2104 worksheet labels are written to the files and at step 2105 the data areas are written. The data areas are written primarily in the form of series information, e.g. definition of time series ranges.

Step 2106 marks the start of a line item loop sequence of steps, the first of which is step 2107. At this step the first/next line item to be written is selected and at step 2108 a check is performed as to whether the line item is valid for export. Line items which are not valid for export include call-ups, although other types may also be included. If the line item is not to be exported then control passes back to step 2106, otherwise step 2109 is invoked. At step 2109 a check is performed as the whether the line item label is a duplicate. If this is the case then at step 2110 the label is updated to make it a unique label and a "duplicate label" error is logged.

After step 2110 (or if the line item label was not a duplicate) control is passed to step 2111, where the line item is written to the file. Step 2111 marks the end of the line item loop and so if there are no further line items to process control is passed to step 2113. At this step global notes, those pieces of information not related to a particular line item or data area (e.g. file size, date of scan, number of line items, worksheet labels, etc.) are written to the file and then the write output procedure 315 ends at step 2114.

A data file structure generally consistent with the processing steps described above includes two data types: data areas and line items. Each line item is indexed to one data area. Each data area has a common structure. All series line items (commonly but not necessarily defined in time) within a data area conform to a single series definition. Series definitions require characteristics and inter-relationships between line items and can be tested to ensure that the relationship is consistent with differences in series definitions. The table below illustrates records that can be stored in the data area data type:

| **Aspect** | **Comment/Description** |
|---|---|
| Data Area Key | ID number, among other things, to link Line Items to appropriate Data Area |
| Series Frequency | The increments between elements of the series Line Item (e.g. days/daily, yearly, 10 metres, etc.) |
| Series Offset | The 'offset point' of the series within a period (e.g. 10^{th} day of the month for monthly series) |
| Series Start | The absolute starting point for the series (e.g. 10 March 2002, 45 meters from the pollution source, etc.) |
| Series Length | The number of elements in the series (e.g. for how many years is a particular Line Item defined). |

Line items generally only need a unique identifier and an array of index numbers linking the line item to its precedent line items (if it has any) and an array of index numbers linking the line item to its dependant line items (if it has any). However, at other aspects it may be useful to store. The table below lists some of the aspects typically found within spreadsheet data which may be useful to store in a line item record list but it will be appreciated that this is not exhaustive nor limiting:

| **Aspect** | **Comment/Description** |
|---|---|
| Line Item Key | ID number, among other things, to link the Line Item to its precedents and dependents. |
| Precedent Array | An array holding Line Item Keys for all Precedent Line Items. If empty, Line Item is an 'input' line item. |
| Dependent Array | An array holding Line Item Keys for all Dependent Line Items. If empty, Line Item is a 'result' line item. |
| Label | A unique identifier, often but not necessarily text, that conveys meaning as to the purpose of the line item (e.g. Revenues, Pollution Concentration, etc). |
| Line Item Type | Used to simplify characterisation of line items (e.g. 'calculation type' as/if line item has a formula, 'call-up' type as/if formula qualifies as a call-up, etc.) |
| Series Type | Defines whether Line Item is a 'constant' (a single value) or a series (an array of values). If a series, the series-type definition is retrieved from the associated Data Area. |
| Value(s) | An array of values for the line item |
| Location Reference Array | Spreadsheet file data generally is defined locationally with a row/column/worksheet reference ID. Location reference holds an array of such location references (as/if more than one indicates that the line item is 'repeated' more than once in the original spreadsheet data file). |
| Data Area Key | The ID number of the Data Area for which the Line Item is associated. |
| Call-up Location Array | Locations in the spreadsheet data file where the given line item may be 'called up' (a variant on a repeated occurrence of a line item). |
| Number Format | Defines how Values for line item are displayed (negative values red, how many decimal points, text formatting, etc). |
| Comments | Comments that the author of the spreadsheet data file may have associated with the line item, either listed in separate cells or attached within cells (so-called 'cell comments'). |
| Scanner Issues | An array of messages associated with the line item uncovered during Scanner's data file processing |

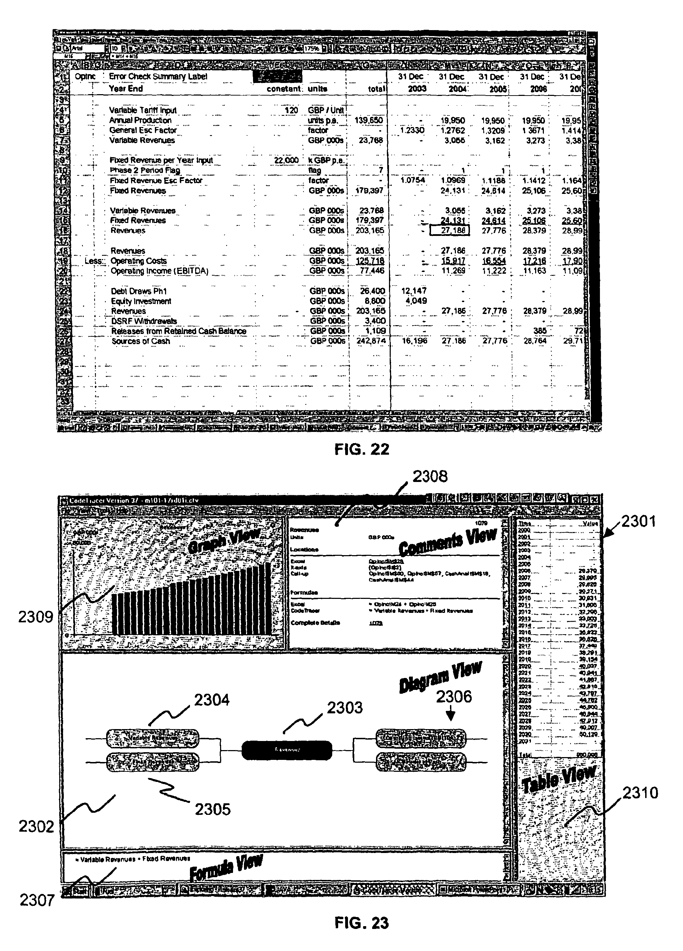

Figure 22 illustrates an example of a spreadsheet screen display and will be used to give an example of how components of the spreadsheet data is transformed into line item data in accordance with an embodiment of the Scanner module 7.

All of the cell/elements in Figure 22 are within a single data area (i.e. the entire worksheet) which has the following characteristics:
■ Line items are arrayed along rows (i.e. the data area is row-wise) with labels posted in column D.
■ Columns indicating the years ending on the dates as noted in Row 2 (e.g. columns L through to O represent the years 2003 through to 2006).

Cell M16 is recognised as part of the line item labelled "Revenues", which consists of an array of values defined for an annual time series (spanning to the right beyond visible range in Figure 22). The Scanner module analyses the data and confirms that the Revenues line item is defined from columns I through T, representing the years 2000 to 2011.

Scanner also recognises that the Revenues line item is defined by a formula (i.e. the cell D16 has a label "Revenues" and a formula "Variable Revenues + Fixed Revenues". These two line items are considered to be precedent line items to the Revenues line item and identifiers for them will be stored in the precedents array record of the Revenues line item.

Having scanned other line items in the spreadsheet data file and after analysing their formulas, the Scanner module recognises that in turn three further line items depend on the Revenues line item. These are considered to be dependent line items to the Revenues line item and identifiers for them are stored in the dependent array record of the Revenues line item.

The Scanner module also analyses the spreadsheet data to recognise that the Revenues line item contains further information, such as the units of GBP 000; its numeric format is expressed with a comma with no figures to the right of the decimal point mark; red font is used, etc. Thus, the record for the Revenues line item may be as follows:

| | |
|---|---|
| Line Item Key | Unique Identifier Number for Revenues |
| Precedent Arrays | Line Item Keys for Variable Revenues and Fixed Revenues Line Items |
| Dependent Arrays | Line Item Keys for the Three Dependent Line Items of Revenues (Sources of Cash, Revenues Total, Operating Income (EBITDA)) |
| Labels | Revenues |
| Line Item Type | Calculation |
| Series Type | Annual Series beginning on 31 Dec 2003 |
| Value | (values from Columns I to T) |
| Location Reference Array | Worksheet Identifier; Row 16; Columns D-T |
| Call-up Location Array | None indicated |
| Number Format | Comma separator with no figures to the right of decimal point |
| Comments | |
| Scanner Issues | None |

Referring to Figure 23, there is a shown a screen display 2301 produced by the Viewer module 9. The file output by the Scanner module 7 can be loaded into the Viewer module 9 upon request by the user. The Viewer module 9 is intended to display the data output by the Scanner module 7 into a line item file in a user-friendly manner so that errors or omissions in the spreadsheet data file can be detected more easily.

The Viewer screen 2301 includes five "panes" of information. The largest pane 2302 is called the "Diagram View" and shows schematically relationships between a selected line item (in the example the Revenues line item shown in the central box 2303) and its precedent and dependent line items. Precedent line items (in the example Variable Revenues 2304 and Fixed Revenues 2305) are shown located to the left of the central box 2303 with lines linking the three boxes. Dependent line items (the three boxes 2306) are located to the right of the Revenues box 2303 with lines connecting the boxes.

The Diagram View pane 2302 is the part of the Viewer screen 2301 which normally dictates the contents of the four other panes 2307 - 2310. A user can selected a line item box in the Diagram View which represents a line item other than the currently selected one 2303 by using a cursor. It is also possible to search for line items by entering all or part of a name. The central box 2303 then is then updated and the precedent line items of that line item are displayed to the left of the central box and its dependent line items are shown on the right. The other four views 2307 - 2310 are also updated accordingly so that they detail information regarding the newly selected line item.

The pane 2307 is a Formula View, which shows how the value of the central line item 2303 is derived from a formula. If the line item is a constant rather than a formula then the value of the constant is shown in the pane 2307.

The pane 2308 shows a "Comments View" and contains information describing various aspects of the central line item 2303. This can be information describing the contents of the line item record such as the units, formatting data and associated comments extracted or created as the result of processing steps described above.

Unlike conventional spreadsheet formulas, the formula shown in the pane 2307 shows the variables of the formula which depend on line items as the labels of the line items, rather than as cell locations as in conventional spreadsheet formulas. This makes the formula more meaningful to a human reader.

Pane 2309 is a Graph View and contains graphical representation (in the example a bar chart, although it will be understood different types of graphs could be shown) showing the values of the selected line item 2303.

A Table View shown in pane 2310 includes a table containing the series range (the years 2000 to 2011 in the example) of the selected line item 2303 in its left hand column and the values of the corresponding cells in its right hand column. The total of the values over the entire series is also shown.

A further useful feature of the Viewer screen is its ability to store a list containing details of which line items were selected for viewing by the user and providing the ability for navigating this list so that the "route" which the user followed from line item to line item can be retraced. This can be particularly useful for tracing errors and their sources.

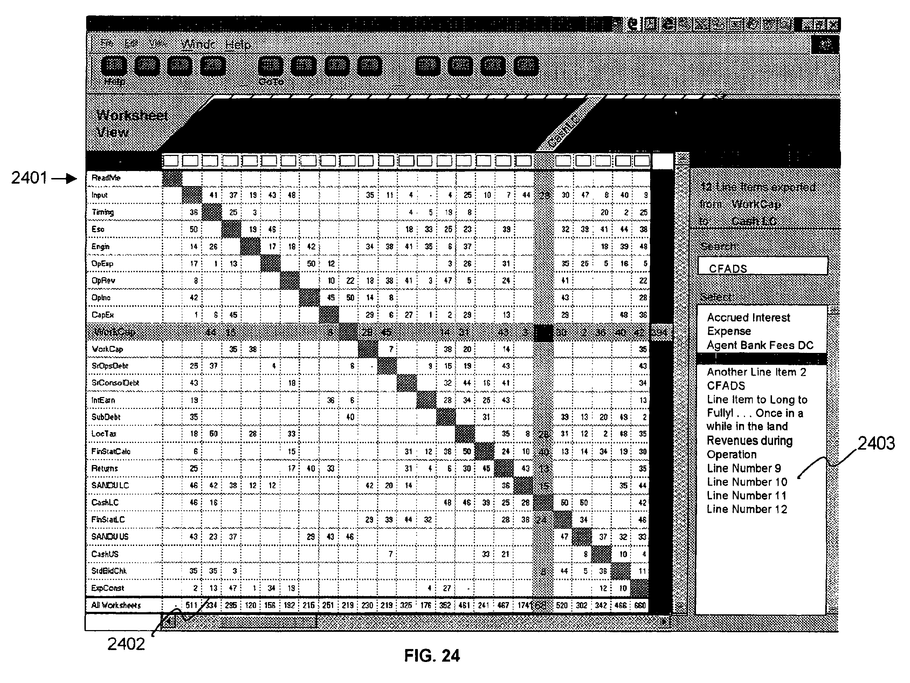

Figure 24 shows a further screen display 2401 which can be provided by the Viewer module.

The worksheet view 2401 includes a two-dimensional table 2402 with the names of worksheets listed down the left-hand side and also along the top row, in each case in the order of appearance in the original spreadsheet file. An entry in the table at the intersection of two worksheets rows/column is blank if there are no line items that are common to the two corresponding worksheets. Otherwise, a number representing the number of line items in common between the two worksheets appears in the entry.

In particular, this indicates the number of line items being passed 'from' the worksheet listed on the left-hand side 'to' the worksheet listed along the top row. Hence the diagonal line running from the top left entry to the bottom right entry is useful to check the style of the original spreadsheet file, since numbers listed in the southeast section indicate line items passed counter to the 'left-to-right' calculation order of the spreadsheet software.

The screen also includes a menu containing a list of line items 2403 related to the selected co-ordinate. From here it is possible to move directly to the line item view rather than selecting it from a drop-down menu.

The Reporter module 10 is intended to provide feedback to the user on stylistic elements of the spreadsheet data which was analysed by the Scanner module 7. The two main features provided by the Scanner module include the List View and the Query View.

The List View provides successive HTML-like pages that categorise line items in the model under various topics. This can include lists of line items with complex formulas, which in turn could be broken further into why they are considered complex (for example, heavy levels of nesting, formula length, complex or mishandled function usage, etc). These will usually be based upon the errors and comments logged and stored in the record for the line item by the Scanner module. Other groupings can include formulas that are out of sequence with the calculation order of the spreadsheet software or ones that have formulas involved in circularities, etc.

The Query View is an interactive screen where the user can select his own criteria for developing List Views. The user interface is similar to that of a known "query wizard". Alternatively, a table of check boxes can be used to select specific characteristics of line items to be included in a particular list.

Operation of the Comparator module 11 will now be described. The Comparator module is intended to compare one or more line item files ("LDF#") with another line item file ("LDF1"), each of which will have been created by the Scanner module. The Comparator module creates an output file that posts an aggregate list of line items, classifying them as identical, changed (and if so, on which aspects), deleted, or new.

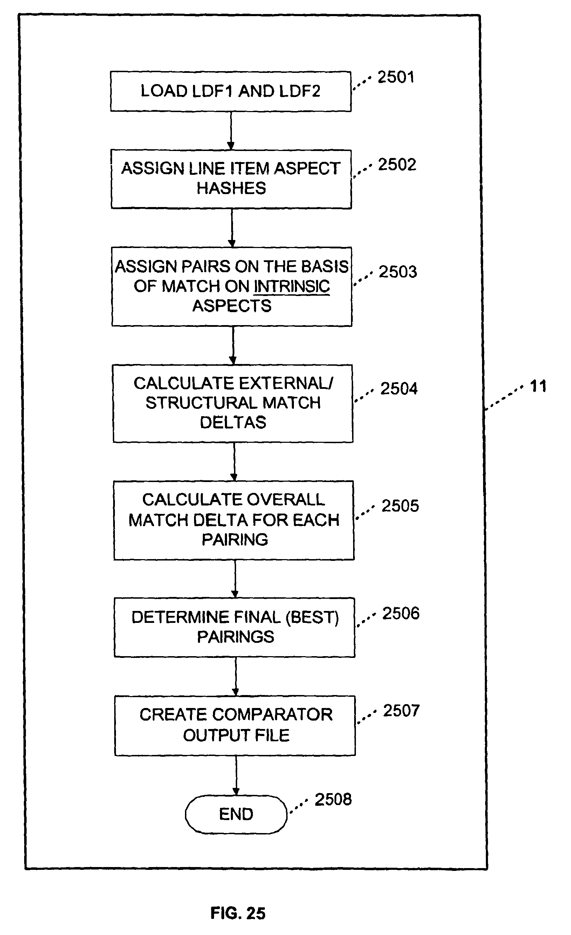

Referring to Figure 25, at step 2501 files LDF1 and LDF2 are loaded. For simplicity this description is drafted reflecting a dual-file comparison (i.e. changes made from LDF1 to LDF2). However, multiple file comparisons could be implemented by creating successive bilateral output files, and then re-processing these line item files successively with comparisons against another. Ultimately this would create enhanced classifications such as 'changed among LDF1, LDF2, and LDF3', 'new to LDF3'. In turn, these could be simplified depending on whether the user specified a 'marked changes from' file amongst the files being compared, which would narrow the output to a series of bilateral comparison files.

The key determination that the Comparator module must make is determining which, if any, line items 'match' between LDF1 and LDF2. Once this determination is made, it is entirely straightforward to identify which line items are identical , and if not which aspect(s) of the line item has/have been changed. If a line item exists in LDF1, but is not included among the identified matched pairings, then it is marked as 'deleted'. Conversely, such an un-matched line item in LDF2 is marked as 'new'.

Though the primary requirements of a line item include only a unique identifier and respective lists of precedent and dependent line items, a line item record can be stored with many other characteristics (as overviewed above). Among these aspects, some are more critical in determining 'matches' than others.

For instance, the location reference, which indicates where in the Excel^{™} file the line item was drawn, is one of the least useful such aspects. If successive rows are inserted in a spreadsheet, this does nothing to fundamentally change any of the existing line items (and certainly doesn't create a 'match' between these line items and the previous occupants of these positions). Because location is virtually irrelevant to the line item match determination, comparing line item files (produced from the Scanner module and essentially location independent) is fundamental to the effectiveness of the Comparator module.

At step 2502, certain data representations (so-called 'hashes') are set-up for each aspect that may be used as a material indicator to a provisional match determination. Such hashes are assigned to each and every line item in both line item files.

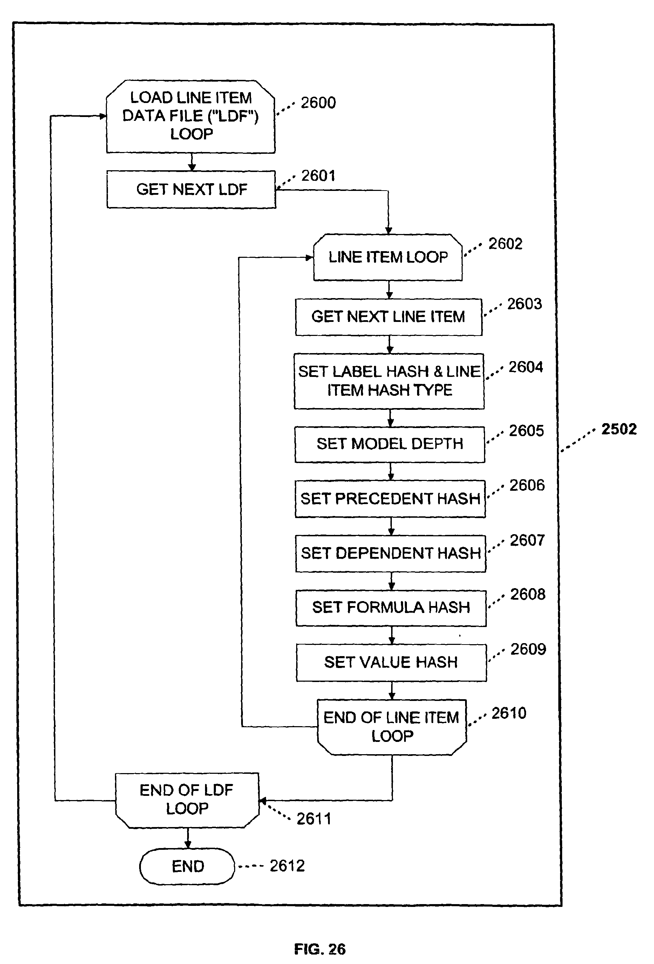

The steps involved in identifying hashes in procedure 2502 are detailed in Figure 26. Step 2600 marks the start of a load Line item Data File (LDF) loop sequence of steps, the first of which is step 2601, where the first/next LDF to be processed is selected. The selected LDF is then processed according to a line item loop sequence of steps starting at step 2602.

At step 2603 the first/next line item is selected and at step 2604 a label hash is set as an abstraction of key elements of the label of the line item using standard information retrieval techniques, including clustering algorithms, inverted file indices, vector space calculations, and other recognised techniques as may be relevant (e.g. use of thesauri, stop word lists, etc.). This step sets the hash with key words in alphabetical order separated by periods. It also eliminates punctuation, stop words and ensures "phrases" are not yet split.

The Line Item type hash is then set to classify line items as either inputs (line items with no precedents), results (line items with no dependents), or intermediate calculations (all other line items). The step also involves setting all inputs to Level 1, setting Level hash numerator to MAX(Level of Precedents) + 1 and then normalising to a percentage based on the maximum numerator in the LDF.

At step 2605 a 'model depth' hash is set, which indicates how far 'through' the logic the line item is positioned. For instance, such a measure might set inputs with a 0% model depth hash, line items relying only on inputs as precedents with a very low model depth hash, and the highest model depth hash set for one or more of the result line items.

At step 2606 a precedent hash is set as simply an array of keys for the line item's precedents. This is essentially no different to the precedent array, except that it may be more effective in processing to sort it by (say) model depth hash, rather than in order of use in the formula (as is done with precedents array).

At step 2607 a dependent hash is set similarly to precedent hash, but of course operating on dependents array of the line item.

At step 2608 a formula hash representing a structural analysis of the formula, which will rely in part on the formula parsing routine described below in connection with the Rewriter module 12 (i.e. a list of arguments, functions, and tree structure of final terms). This can be used for both formula pattern and argument position match deltas.

At step 2609 a value hash is set which combines the line item values together with the series definition associated with its affiliated data area. If the line item is a TSV then the array of the values of the line item and indicators of the time series definition are set.

Step 2610 marks the end of the line item loop and so if there is no more data to process for the current line item control is passed to step 2611, which denotes the end of the LDF loop. The procedure 2505 ends at step 2612 when there are no more LDFs to process.

At this stage, processing moves to a comparison of each line item combination, using inverted index lists to ignore comparisons between 'no-match' pairings and assessing remaining combinations in turn. This must be done in two basic phases: the first assesses differences in line item aspects that are 'intrinsic' (i.e. can be assessed by evaluating only the hashes for the two line items being compared), and the second relates to 'structural' comparisons, which in turn relate to the degree of possible match among precedent or dependent line items.

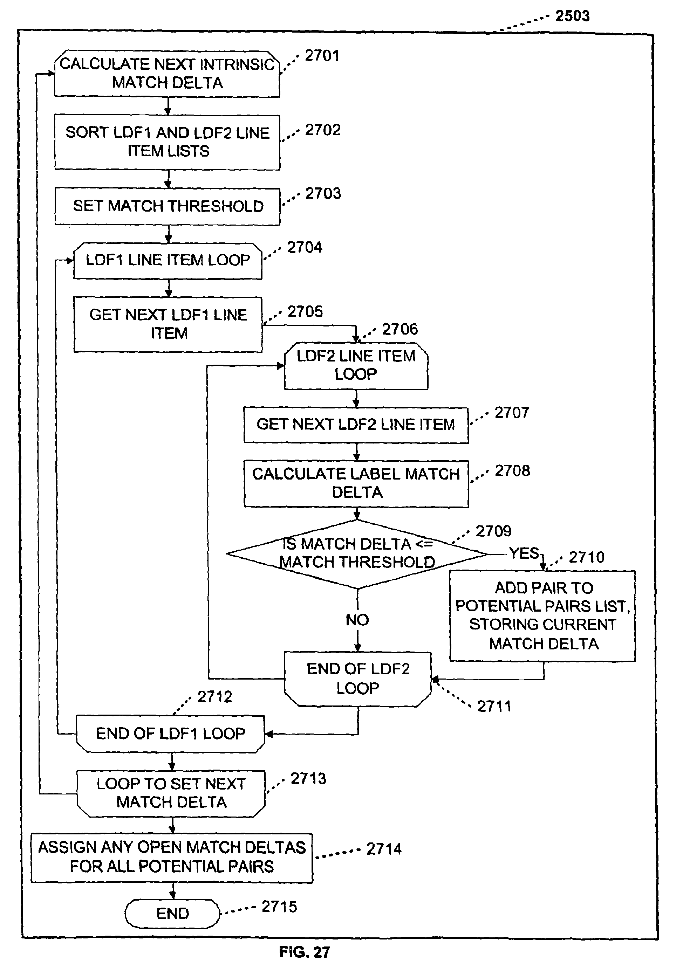

At step 2503 (detailed in Figure 27) a generic processing structure for any/all intrinsic aspects is executed. These include labels, formula patterns, model depth, units and values match deltas. Step 2701 marks the start of a "calculate next intrinsic match delta" sequence of steps, the first of which is step 2702. At this step the line item lists of LDF1 and LDF2 are sorted so as to speed up processing for matching on the current Aspect Hash.

At step 2703 a "percentage change" threshold for each "intrinsic" aspect that fixes the level that allows a pairing to be considered a potential pair is set.

Step 2704 marks the start of a LDF1 line item loop sequence of steps, the first of which is step 2705 where the first/next LDF1 line item to be processed is selected. Step 2706 denotes the beginning of a LDF2 line item loop sequence of steps, the first of which is step 2707, where the first/next LDF2 line item is selected. The two selected line items are assessed for any LDF1 vs LDF2 line item pairing at step 2708 as follows:
Label Match No. Compare the label hashes and, again using the standard techniques referenced above, calculate a numeric representation of the degree of similarity between the line items' labels (e.g. 0% to 100%, with 100% being an identical match).

Line Item Type Match No. Check whether the two line items have the same line item type (e.g. both inputs, intermediate calculations, or results). Set a Boolean indicator as to whether such a match exists or not.

Formula Pattern Match No. Here the general 'structure' of the formula, without regard to the line item's precedents can be evaluated using standard comparison techniques. Hence the formulas "= A + B" and "= A + C" have similar 'patterns' and hence this pair would receive a 100% formula pattern match even though one of the arguments is different (and hence of course the formula returns a different result).

Model Depth Match No. Calculated simply by comparing the model depth hash of LDF2 vs. the model depth hash of LDF1. Pairs with line items in comparably similar positions in the model will have commensurately higher Model Depth Match Nos.

Units Match No. As/if such information is available, a similar matching mechanism as used for the Label Match No. can be processed.

Values Delta. A evaluation of the relative change in values, ensuring that compared values are aligned with the relevant series positions and that weighting is attributed to the level of precision (number of significant figures) present in the respective value hashes.

To be placed on the Provisional Match List, each such calculated Match No. is compared at step 2709 with a threshold value drawn from a file. If the degree of match (i.e. the Match No.) is above such a threshold then at step 2710 the current pair is placed on the Provisional Match List.

After step 2710 (of if the degree of match was below the threshold), control is passed to step 2711, which marks the end of the LDF2 loop. Step 2712 marks the end of the LDF1 loop and step 2713 denotes the end of the loop of steps started at step 2701.

After execution of the loops comes to an end control is passed to step 2714, where each line item pair on the Provisional Match List is reprocessed to calculate Match Nos. not yet calculated. For instance, a Provisional Match made because of a close label match, may not have (yet) had its model depth match number posted.

At this stage an aggregated overall Match No. for the pair can be calculated by combining the independent Match Nos. for each hash through a simple averaging or weighting of components based on perceived significance. The procedure 2503 ends at step 2715.

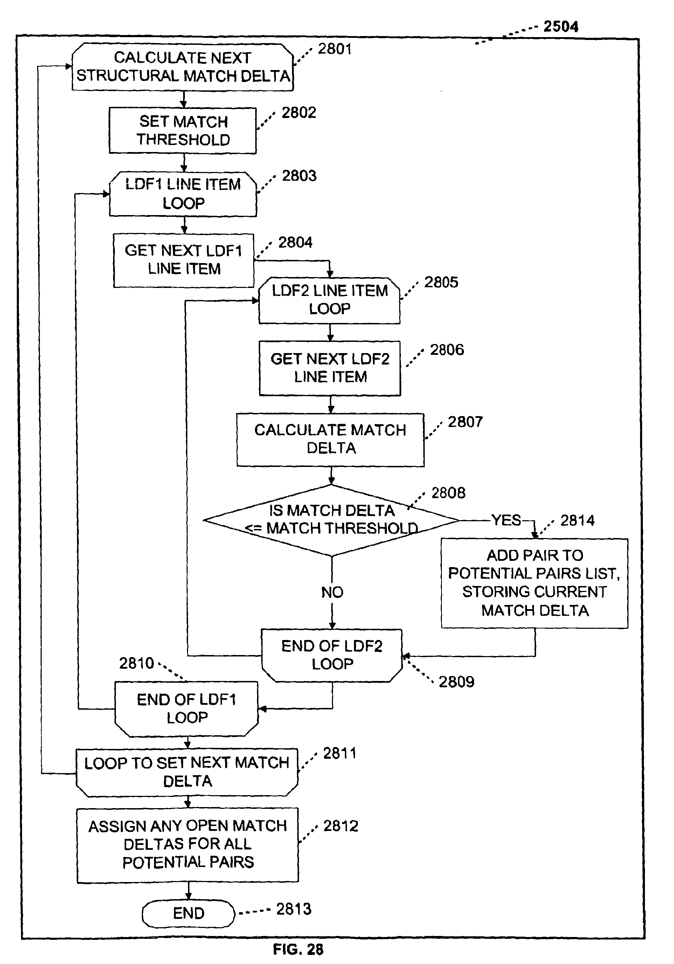

Having assigned provisional Match Nos. for all entries on the Provisional Match List (based so far exclusively on intrinsic aspects), the Comparator module can then evaluate each possible pair combination between LDF1 and LDF2 on certain 'structural' aspects at step 2504. These include precedents, dependents and argument location match deltas. The steps involved in procedure 2504 are described with reference to Figure 28.

Step 2801 marks the start of a "calculate next structural match delta" sequence of steps, the first of which is step 2802. At step 2802 a "percentage change" threshold for each aspect that fixes the level that allows a pairing to be considered a potential pair is set. Steps 2803 to 2806, which deal with looping through line items in LDF1 and LDF2, are comparable with steps 2704 to 2707 of Figure 27, respectively. Steps 2809 to 2813 are also comparable with steps 2711 to 2715.

The structural aspects of pair combinations of line items in LDF1 and LDF2 are calculated in step 2807 as follows:
Precedent Match No. The Comparator module re-evaluates every possible pair combination of line items from LDF1 and LDF2. For each such pair, each of the possible pairings of the precedents of each line item is tested against the Provisional Match List. If such an entry is found, then Comparator assigns the overall Match No. to this pairing of precedents. If there are one or more such pairings among the precedent combinations listed on the Provisional Match List that are in conflict for using a line item twice, then Comparator posts the pairing with the highest Match No. (i.e. best match). Any precedent combinations not matched with an entry of the Provisional Match List are assigned a (minimum) Match No. of 0%. Comparator then averages the precedent pair Match Nos. to calculate the precedent Match No. for the current pairing.

Dependent Delta. Identical to precedent delta, but operating on the pair combinations among the dependents of LDF1 and LDF2 line items.

Argument Location. This analysis judges the 'position' of a precedent with the line items formula (based on the formula parsing routine described in Rewriter). As/if the precedent line items appear to be 'used in a different way' in calculating the line item, a lower argument location Match No. will be calculated.

If a pair combination is below the relevant thresholds on each and all tests performed at step 2808 then it is essentially judged as having no realistic potential to be a match line item pair. Otherwise the pair is added to the potential pairs list at step 2814. At this stage, the Provisional Match List contains all pair combinations having been judged to qualify on one or more aspect Match Nos. being sufficiently high. However, the structural aspect Match Nos. will be influenced by movements in the overall Match Nos. for any precedent/dependent pairs. This in turn will influence the overall pair Match No. for the line item in question, in turn influencing other precedent/dependent aspect Match Nos. After the end of the loops at step 2811 the procedure loops through the list and assigns any "open" match deltas at step 2812. For instance, a pair added because of a high precedents match may not yet have had the dependent match delta calculated. Procedure 2504 ends at step 2813.

The Provisional Match List is reprocessed to a stable, or near stable, state through iterative recalculation at step 2505 of Figure 25.

The Provisional Match List is then sorted in decreasing order of overall Match Nos. (hence pairs judged with best match will be assessed first).

At step 2506 the Comparator module steps through the list, assigning "Best Matches" for any Provisional Match pair with an overall Match No. greater than a pre-defined threshold (or alternately based upon steep gradient in the overall pair delta scores, indicating that potential pairs are beginning to look 'force fit'). As/if any Provisional Match pairs have one or both line items already identified with a Best Match (through a Provisional Match occurring higher on the list), these pairings are disqualified (i.e. ignored).

At step 2507 the Comparator module outputs a file with all relevant line item data from the respective LDFs. For all Best Matches, each line item aspect (including those not used for determination of the Best Match) is compared, and any changes are noted. Such pairings are saved as 'matched' line items in the output file and marked as identical or changed as appropriate. Un-matched line items are saved and marked as deleted or new as appropriate. Step 2508 represents the end of the processing of the Comparator module 11.

Operation of the Re-writer module 12 will now be described. The Re-writer module is intended to create a spreadsheet data file from a line item file created by the Scanner module. The Re-writer module creates a data file having a style which is easily read and understood by humans. It will be appreciated that the details of the style examples given below could be modified so that spreadsheets following different styles can be created according to user requirements.

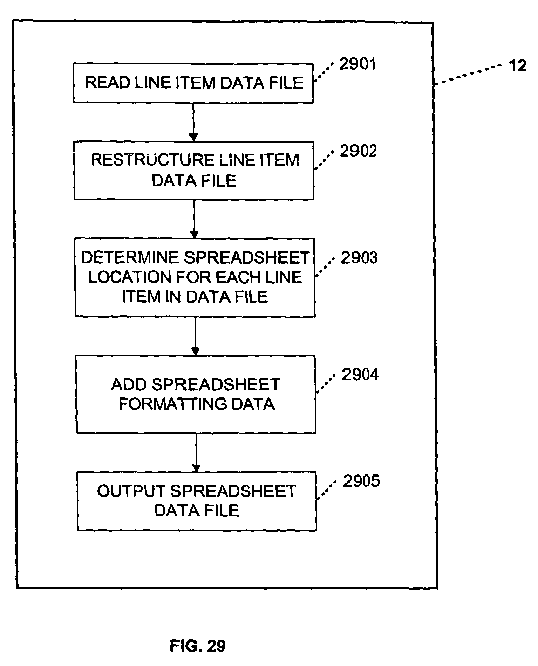

Referring to Figure 29, at step 2901 a line item data file is read by the Re-writer module. At step 2902 the line item data file is restructured. The restructuring involves the creation of new line items in accordance with style requirements. In particular, certain imbedded inputs will be extracted and constructed as explicitly visible line items, which allows such inputs to be properly labelled and commented. Another aim of the restructuring is to simplify formulas which are considered to be complex (for example formulas which include too much nesting or too many precedents) allowing a simpler step-by-step building of the formula.

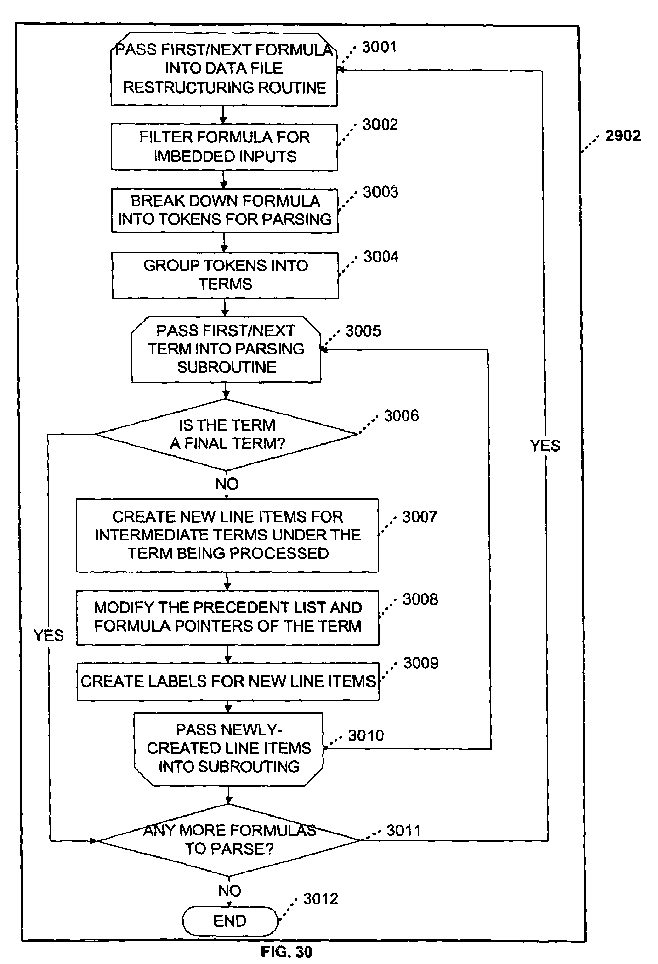

Steps performed by the restructuring routine 2902 are shown in Figure 30. At step 3001 the first formula in the line item data file is passed into the data file restructuring routine and at step 3002 any imbedded inputs in it are filtered. It is desirable that models are built with the inputs that drive the logic being explicitly visible (usually on a dedicated "input worksheet"). If such an input has been written into a spreadsheet formula then the Re-writer module will set up a separate (input) line item. A label for the line item is also created using the label of the line item in which the embedded input was found and its value. For example, a formula in a line item called "Revenues" having the form = 4.56 * units_sold_per_month will have the following label created for it:
Imbedded_4.56 Revenues

In some cases, it may be desirable not to perform such filtering on all numerical constants that have been written directly into formulas because some numbers are commonly used as "universal constants". For example, the number 24 is often used to designate the number of hours in a day and the imbedded filtering step 3002 could be set up so that new line items/labels are not created for particular numbers.

The formula is then broken down into tokens for parsing at step 3003. This is a common technique used to determine the syntactic structure of a string of symbols. In the Re-writer module tokens are elements of the overall formula which can be categorised into one of the following types:
■ Line item references (or precedents or precedent references)
■ Fixed constants. These are any numerical, textual or Boolean values which remain in the formula after the filtering for imbedded constants are filtered as described above.
■ Arguments, comprising line item references and fixed constants, including function arguments
■ Operators. These are normally equivalent to arithmetic, comparison, text and reference operators found in existing spreadsheet software.
■ Functions equivalent to the ones that are provided by the spreadsheet software.
■ Separators, which consist of all operators (see above) plus other characters used to separate tokens, such as commas, spaces and parentheses.

At step 3004 the tokens are grouped into terms. In the Re-writer module "terms" are mathematical expressions consisting of one or more of the above categories of tokens plus at least one argument. Each term in the formula is structured in a hierarchy of levels, which can be identified by a term number. The term number can be written in a "heading number" type syntax. For example, a term with a term number of 2.3.1 represents the first term (on the third term level) of the third term (on the second term level) of the second term (on the first term level). There are two types of terms:
■ Final terms are terms calculated with arguments or functions on the same calculation level (as documented for the relevant spreadsheet software). For example, barring parentheses which of course disrupt the natural calculation order, addition and subtraction are generally grouped together in calculation order, with arguments calculated left to right, but after multiplication and division. Hence a term with operators on the same calculation level, need not be sub-divided further (from the perspective of good modelling style).
■ Intermediate terms are any terms that are not final terms and can therefore contain "sub-terms" which themselves can either be of the intermediate or final term type.

At step 3005 the first (according to the term number hierarchy) term in the formula being processed is passed to a parsing subroutine. The first step 3006 of the subroutine checks whether the term being processed is a final term. If this is not the case then control is passed to step 3007 where new line items for intermediate terms under (according to the term number hierarchy) the term being processed are created. At step 3008 the precedent list and formula pointers of the term being processed are modified to take into account the new precedent list created at step 3007. Labels for the new line items are created at step 3009 and at step 3010 each newly created line item is passed into the parsing subroutine and so the sequence of steps beginning at step 3005 is repeated for each such line item. It will be appreciated by those skilled in the art that the parsing subroutine could be efficiently written as a recursive procedure.

If the final term check at step 3006 is positive then control is passed to step 3011 where a check is performed whether there are any further formulas in the line item data file to parse. If there is then control is passed back to step 3001 so that the next formula in the line item data file is processed. If there are no more formulas then at step 3012 the line item restructuring routine ends and control is passed to step 2903.

At step 2903 a suitable location (typically specifying worksheet, row and column) in the spreadsheet is found for the line items. Rules which are typically considered to determine the locations include:
■ Ensuring that precedent line items are called up proximate to the line item.
■ Calculations should be listed in an order that relates to the calculation order typically followed by the Excel^{™} spreadsheet software ("front to back, top to bottom"). When there are 'loops' in the logic (and hence calculation order must be violated at points) these circumstances should be kept to a minimum.
■ It is preferred that line items are grouped by line item type, for example, input line items appear on input worksheets, calculation line items on calculation worksheets etc.
■ Calculations can be grouped by "financial function" for example tax related calculations appear on a dedicated worksheet, with revenue calculations on another. Line items related to a particular area can be identified by matching certain keywords against a dictionary.
■ Line items may be grouped together by similar time structures, for example line items that are calculated on a day-to-day basis appear on a different sheet to ones that are calculated annually.

The location finding step 2903 analyses the line items according to such rules and tags data describing the location to each line item.

At step 2904 formatting data is added. The formatting will obviously depend on stylistic requirements, for example following rules for shading/fonts for headings.

At step 2905 the data is processed and output as a data file compatible with the spreadsheet software.

## Claims

1. A method of processing spreadsheet data, the method including steps of:
identifying (306, 307, 308, 310) line items from data (3) constituting a spreadsheet, where a line item is identified as a group of related cell data including identifier data indicating the meaning or purpose of data in the group, and a value or a series of values;
analysing (310, 311, 312, 313) any inter-dependencies among some or all of the identified line items, and
storing (315) data defining at least some of the identified line items and the identified inter-dependencies.

2. A method according to claim 1, wherein the step of identifying the line items includes a step of assigning a unique identifier to each said identified line item.

3. A method according to any one of the preceding claims, wherein the step of identifying line items includes a step of identifying a series relating to one or more of the values of the line item.

4. A method according to claim 3, wherein the series is defined in time.

5. A method according to claim 3, wherein the series is defined by a standard functional relationship.

6. A method according to any one of claims 3 to 5, wherein the step of identifying a series includes a step (414) of grouping adjacent spreadsheet cells into a single said line item if the cells contain data representing functionally equivalent formulas.

7. A method according to any one of the preceding claims, wherein the step of identifying line items includes a step of identifying data areas in the spreadsheet, where a data area contains data that is common to one or more line items within it, so that line items are identified within each said data area found.

8. A method according to claim 7, where the step of identifying data areas includes a step (306) of analysing spreadsheet cell data characteristics to identify cells that are used as headers.

9. A method according to claim 8, wherein the cell data characteristic analysed includes the font of text in the cells.

10. A method according to claim 8 or claim 9, wherein the analysis of cell data characteristics includes a check for the presence of date-related data.

11. A method according to any one of claims 8 to 10, wherein the analysis of cell data characteristics includes a check for the presence of words that are commonly used in headers.

12. A method according to claim 11, wherein the check includes referencing a data store including a list of words commonly used as headers.

13. A method according to any one of the preceding claims, wherein the step of analysing the inter-dependencies among some or all of the identified line items includes steps of:
identifying any other line items that determine the state of a particular line item, and
identifying any other line items whose states rely on the line item.

14. A method according to any one of the preceding claims, wherein the step of analysing the inter-dependencies among some or all of the line items includes a step (912, 1105) of determining a type of a said identified line item.

15. A method according to claim 14, wherein the type of the line item is determined to be "input" if its state does not rely on any other line item.

16. A method according to claim 14, wherein the type of the line item is determined to be "calculation" if the value of the line item is derived using an expression relying on cell-based arguments.

17. A method according to claim 14, wherein the type of the line item is determined to be "call-up" if the values of the line item are identical to another said line item through means of a direct cell reference to values in the other line item.

18. A method according to claim 16, wherein the step of analysing identified line items of the calculation type includes steps (312) of:
obtaining data from the spreadsheet cell(s) containing the formula from which the value(s) of the line item are derived;
breaking down the data describing the formula into tokens, and
if a said token is a reference to a spreadsheet cell, converting the cell reference to a reference to a corresponding line item.

19. A method according to claim 16, wherein the step (312) of analysing identified line items for line items identified as a calculation type includes steps of:
checking if its formula relates to inter-dependencies among line items represented by series of values, and
converting the formula into an expression indicating any offsets in these inter-dependencies.

20. A method according to any one of the preceding claims, wherein the step of storing data includes a step of storing further associated data with the line item, the associated data being selected from the set:
text that conveys meaning as to the purpose of the line item;
an indicator whether the line item is a constant (a single value) or a series (an array of values);
arrays referencing pointers to any other line items that determine the state of a particular line item;
arrays referencing pointers to any other line items whose states rely on the line item;
a reference to a location of one or more cell in the spreadsheet with which the line item is associated;
data describing how values for the line item are displayed;
comments included in the spreadsheet file, or
comments associated with the analysis of the spreadsheet data.

21. A method according to claim 17, wherein the step of storing data further includes a step (2108) of filtering line items of the call-up type from being stored.

22. A method according to any one of the preceding claims, further including a step of providing a display (2301) representing at least one line item.

23. A method according to claim 22, wherein the data displayed is user-selectable.

24. A method according to claim 23, wherein selecting a line item (2303) displays any line items (2304, 2305) that determine the state of the selected line item or any line items (2306) whose state rely on the selected line item.

25. A method according to any one of claims 22 to 24, wherein the display represents relationships between line items by means of lines leading from a first line item to any other line items that determine the state of the first line item or any other line items whose state rely on the first line item.

26. A method according to any one of claims 23 to 25, further including a step of storing data describing which line items were selected by a user.

27. Apparatus (5) for processing data relating to a spreadsheet, the apparatus including:
a spreadsheet analysis component (7) for identifying line items from data constituting a spreadsheet, where a line item is identified as a group of related cell data including identifier data indicating the meaning or purpose or data in the group, and a value or a series of values;
a line item analysis component (7) for analysing any inter-dependencies among some or all of the identified line items, and
an output component (7) for storing data defining at least some of the identified line items and the identified inter-dependencies.

28. A computer program product comprising a computer readable medium, having thereon:
computer program code means, when the program code is loaded, to make the computer execute a procedure to:
identify (306, 307, 308, 309, 310, 311) line items from data (3) constituting a spreadsheet, where a line item is identified as a group of related cell data including identifier data indicating the meaning or purpose of data in the group, and a value or a series or values;
analyse (310, 311, 312, 313) any inter-dependencies among some or all of the identified line items, and
store (315) data defining at least some of the identified line items and the identified inter-dependencies.

## Patentansprüche

1. Verfahren zur Bearbeitung von Tabellenkalkulationsdaten mit den folgenden Schritten:
Identifizierung (306, 307, 308, 310) von Zeilenangaben aus ein Tabellenblatt bildenden Daten, auf dem eine Zeilenangabe als Gruppe diesbezüglicher Zeilendaten identifiziert wird, einschließlich ldentifizierungsdaten, die die Bedeutung oder den Zweck der in der Gruppe befindlichen Daten angeben sowie einen Wert oder eine Reihe von Werten;
Analysierung (310, 311, 312, 313) beliebiger gegenseitiger Abhängigkeiten unter einigen oder allen identifizierten Zeilenangaben und Speicherung (315) von Daten, betreffend wenigstens einige der identifizierten Zeilenangaben und der identifizierten gegenseitigen Abhängigkeiten.

2. Verfahren nach Anspruch 1, wobei der Schritt der Identifizierung der Zeilenangaben einen Schritt der Zuordnung eines einzigen Identifizierers zu jeder identifizierten Zeilenangabe beinhaltet.

3. Verfahren nach einem der vorhergehenden Ansprüche, wobei der Schritt der Identifizierung der Zeilenangaben einen Schritt der Identifizierung einer Reihe von Zeilenangaben beinhaltet, die sich auf einen oder mehrere Werte der Zeilenangabe beziehen.

4. Verfahren nach Anspruch 3, wobei die Reihe zeitbezogen ist.

5. Verfahren nach Anspruch 3, wobei die Reihe durch eine standadisierte funktionelle Beziehung definiert ist.

6. Verfahren nach einem der Ansprüche 3 bis 5, wobei der Schritt der Identifizierung einer Reihe einen Schritt (414) der Gruppierung benachbarter Tabellenblattzeilen in eine einzige besagte Zeilenangabe beinhaltet, wenn die Zeilen Daten enthalten, die funktionell äquivalente Formeln darstellen.

7. Verfahren nach einem der vorhergehenden Ansprüche, wobei der Schritt der Identifizierung der Zeilenangaben einen Schritt der Identifizierung von Datenbereichen in dem Tabellenblatt aufweist, wobei ein Datenbereich Daten enthält, die für eine oder mehrere Zeilenangaben innerhalb des Bereiches üblich sind, so daß die Zeilenangaben in jedem der besagten Datenbereiche identifiziert werden, die gefunden werden.

8. Verfahren nach Anspruch 7, wobei der Schritt der Identifizierung von Datenbereichen einen Schritt (306) der Analysierung von Tabellenblattzeilendatenkennzeichen beinhaltet, um Zeilen zu identifizieren, die als Kopfzeilen verwendet werden.

9. Verfahren nach Anspruch 8, wobei das analysierte Zeildatenkennzeichen die Schrift des Textes in den Zeilen aufweist.

10. Verfahren nach Anspruch 8 oder 9, wobei die Analyse der Zeilendatenkennzeichen eine Prüfung des Vorhandenseins der datenbezogenen Daten beinhaltet.

11. Verfahren nach einem der Ansprüche 8 bis 10, wobei die Analyse der Zeilendatenkennzeichen eine Prüfung des Vorhandenseins an Wörtern beinhaltet, die gewöhnlich in Kopfzeilen benutzt werden.

12. Verfahren nach Anspruch 11, **dadurch gekennzeichnet, daß** die Prüfung eine Bezugnahme auf einen Datenspeicher enthält, der eine Liste von Wörtern beinhaltet, die gewöhnlich als Kopfzeilen benutzt werden.

13. Verfahren nach einem der vorhergehenden Ansprüche, wobei der Schritt der Analysierung der gegenseitigen Abhängigkeiten unter einigen oder allen identifizierten Zeilenangaben den Schritt enthält:
Identifizierung irgendwelcher anderer Zeilenangaben, deren Status sich auf die Zeilenangabe bezieht.

14. Verfahren nach einem der vorhergehenden Ansprüche, wobei der Schritt der Analysierung der gegenseitigen Abhängigkeiten unter einigen oder allen Zeilenangaben einen Schritt (912, 1105) der Bestimmung einer Art einer der besagten identifizierten Zeilenangaben enthält.

15. Verfahren nach Anspruch 14, wobei die Art der Zeilenangabe als "Eingabe" bezeichnet wird, wenn ihr Status sich nicht auf irgendeine andere Zeilenangabe bezieht.

16. Verfahren nach Anspruch 14, wobei die Art der Zeilenangabe als "Kalkulation" bezeichnet wird, wenn der Wert der Zeilenangabe unter Verwendung eines Ausdrucks abgeleitet wird, der sich auf zeilenbasierte Argumente stützt.

17. Verfahren nach Anspruch 14, wobei die Art der Zeilenangabe als "Aufruf" bezeichnet wird, wenn die Werte der Zeilenangabe der anderen dieser Zeilenangabe identisch sind, und zwar mit Hilfe eines direkten Zeilenbezugs auf Werte in der anderen Zeilenangabe.

18. Verfahren nach Anspruch 16, wobei der Schritt der Analysierung identifizierter Zeilenangaben des Kalkulationstyps folgende Schritte (312) beinhaltet:
Empfangen von Daten von der oder den Tabellenblattzeilen, die die Formel beinhalten, von der der oder die Werte der Zeilenangabe abgeleitet werden;
Ausdrücken der Daten, die die Formel beschreiben, durch Zeichen, und wenn ein genanntes Zeichen sich auf eine Tabellenblattzeile bezieht, Umwandeln des Zellenbezugs in einen Bezug auf eine entsprechende Zeilenangabe.

19. Verfahren nach Anspruch 16, wobei der Schritt (312) der Analysierung identifizierter Zeilenangaben nach Zeilenangaben, die einem Kalkulationstyp zugeordnet werden, folgende Schritte enthält:
Überprüfen, ob sich die Formel auf die gegenseitigen Abhängigkeiten unter den Zeilenangaben bezieht, die durch die Reihe Werte dargestellt werden und Umwandeln der Formel in einen Ausdruck, der jede beliebige Abweichung in diesen gegenseitigen Abhängigkeiten anzeigt.

20. Verfahren nach einem der vorhergehenden Ansprüche, wobei der Schritt der Speicherung von Daten einen Schritt der Speicherung weiterer der Zeilenangabe zugeordneter Daten enthält, wobei die zugeordneten Daten aus der Gruppe ausgewählt werden:
ein Text, der die Bedeutung hinsichtlich des Zweckes der Zellenangabe transportiert;
ein Indikator dafür, ob die Zeilenangabe eine Konstante (ein einziger Wert) oder eine Reihe ist (eine Reihe von Werten);
Reihen von Bezugszeigern für jede andere Zeilenangabe, die den Status einer individuellen Zeilenangabe bestimmt;
Reihen von Bezugszeigern für jede andere Zeilenangabe, die sich auf die Zeilenangaben beziehen;
ein Bezug auf den Ort einer oder mehrerer Zeilen in dem Tabellenblatt, der der Zeilenangabe zugeordnet ist;
Daten, die beschreiben, wie Werte für die Zeilenangabe dargestellt sind;
in der Tabellenblattakte enthaltene Bemerkungen oder zu der Analyse der Tabellenblattdaten gehörende Bemerkungen.

21. Verfahren nach Anspruch 17, wobei der Schritt der Speicherung von Daten ferner einen Schritt (2108) der Filterung von Zeilenangaben des Aufruftyps, die nicht gespeichert werden, enthält.

22. Verfahren nach einem der vorhergehenden Ansprüche, mit einem weiteren Schritt der Schaffung einer Anzeige (2301), die wenigstens eine Zeilenangabe darstellt.

23. Verfahren nach Anspruch 22, wobei die dargestellten Daten durch Benutzer ausgewählt werden können.

24. Verfahren nach Anspruch 23, wobei die Auswahl einer Zeilenangabe (2303) beliebige Zeilenangaben (2304, 2305) darstellt, die den Status der ausgewählten Zeilenangabe irgendwelcher Zeilenangaben (2306) bestimmen, deren Status sich auf die ausgewählte Zeilenangabe bezieht.

25. Verfahren nach einem der Ansprüche 22 bis 24, wobei das Display die Abhängigkeiten zwischen den Zeilenangaben mit Hilfe von Zeilen darstellt, die von einer ersten Zeilenangabe bis zu einer beliebig anderen Zeilenangabe führen, welche den Status der ersten Zeilenangabe oder irgendeiner anderen Zeilenangabe bestimmt, deren Status sich auf die erste Zeilenangabe bezieht.

26. Verfahren nach einem der Ansprüche 23 bis 25 mit einem weiteren Schritt der Speicherung von Daten, die beschreiben, welche Zeilenangaben von einem Benutzer ausgewählt wurden.

27. Vorrichtung (5) zur Verarbeitung von Daten, die sich auf eine Tabellenkalkulation beziehen mit folgenden Merkmalen:
einer Tabellenblatt-Analysekomponenten (7) zur Identifizierung von Zeilenangaben aus den Daten, die ein Tabellenblatt bilden, wobei eine Zeilenangabe als eine Gruppe diesbezüglicher Zeilendaten identifiziert wird, die Identifizierungsdaten aufweisen, welche die Bedeutung oder den Zweck der Daten in der Gruppe zeigen sowie einen Wert oder eine Reihe von Werten;
eine Zeilenangabe-Analysekomponente, die zur Analysierung irgendeiner gegenseitigen Abhängigkeit unter einigen oder allen identifizierten Zeilenangaben; und
eine Ausgabekomponente (7) zur Speicherung von Daten, die wenigstens einige der identifizierten Zeilenangaben und der identifizierten gegenseitigen Abhängigkeiten festlegen.

28. Computerprogrammprodukt, das ein computerlesbares Medium aufweist und versehen ist mit:
einer Computerprogrammcode-Einrichtung, sobald der Programmcode geladen Ist, um den Computer wie folgt arbeiten zu lassen:
Identifizieren (306, 307, 308, 309, 310, 311) von Zeilenangaben aus den Daten (3), die auf einem Tabellenblatt enthalten sind, wobei eine Zeilenangabe als Gruppe abhängiger Zellendaten identifiziert wird, die Identifizierungsdaten enthält, welche die Bedeutung und den Zweck der in der Gruppe befindlichen Daten angeben, sowie einen Wert oder eine Reihe von Werten;
Analysierung (310, 311, 312, 313) irgendwelcher gegenseitiger Abhängigkeiten unter einigen oder allen identifizierten Zeilenangaben; und
Speicherung (315) der Daten, die wenigstens einige der identifizierten Zeilenangaben und die identifizierten gegenseitigen Abhängigkeiten festlegen.

## Revendications

1. Procédé de traitement de données de tableur, le procédé comprenant les étapes consistant à :
- identifier (306, 307, 308, 310) des éléments de ligne provenant de données (3) constituant un tableur, où un élément de ligne est identifié comme un groupe de données de cellules apparentées comprenant des données d'identifiant indiquant la signification ou le but des données dans le groupe, et une valeur ou une série de valeurs ;
- analyser (310, 311, 312, 313) toute interdépendance parmi certains ou tous les éléments de ligne identifiés ; et
- stocker (315) des données définissant au moins certains des éléments de ligne identifiés et des interdépendances identifiées.

2. Procédé selon la revendication 1, dans lequel l'étape d'identification des éléments de ligne comprend une étape d'attribution d'un identifiant unique à chaque élément de ligne identifié précité.

3. Procédé selon l'une quelconque des revendications précédentes, dans lequel l'étape d'identification des éléments de ligne comprend une étape d'identification d'une série se rapportant à une ou plusieurs des valeurs de l'élément de ligne.

4. Procédé selon la revendication 3, dans lequel la série est définie dans le temps.

5. Procédé selon la revendication 3, dans lequel la série est définie par une relation fonctionnelle standard.

6. Procédé selon l'une quelconque des revendications 3 à 5, dans lequel l'étape d'identification d'une série comprend une étape (414) de groupement de cellules du tableur adjacentes en un seul élément de ligne précité si les cellules contiennent des données représentant des formules fonctionnellement équivalentes.

7. Procédé selon l'une quelconque des revendications précédentes, dans lequel l'étape d'identification des éléments de ligne comprend une étape d'identification de zones de données dans le tableur, où une zone de données contient des données qui sont communes à un ou plusieurs éléments de ligne à l'intérieur de celui-ci, de telle sorte que des éléments de ligne sont identifiés à l'intérieur de chacune desdites zones de données trouvées.

8. Procédé selon la revendication 7, dans lequel l'étape d'identification des zones de données comprend une étape (306) d'analyse des caractéristiques de données de cellule du tableur pour identifier des cellules qui sont utilisées comme en-têtes.

9. Procédé selon la revendication 8, dans lequel la caractéristique de données de cellule analysée comprend la police de texte dans les cellules.

10. Procédé selon la revendication 8 ou la revendication 9, dans lequel l'analyse des caractéristiques de données de cellule comprend un contrôle de la présence de données liées à la date.

11. Procédé selon l'une quelconque des revendications 8 à 10, dans lequel l'analyse des caractéristiques de données de cellule comprend un contrôle de la présence de mots qui sont couramment utilisés dans les en-têtes.

12. Procédé selon la revendication 11, dans lequel le contrôle comprend un référencement d'un stock de données comprenant une liste de mots couramment utilisés comme en-têtes.

13. Procédé selon l'une quelconque des revendications précédentes, dans lequel l'étape d'analyse des interdépendances parmi certains ou tous les éléments de ligne identifiés comprend les étapes consistant à :
- identifier tout autre élément de ligne qui détermine l'état d'un élément de ligne particulier ; et
- identifier tout autre élément de ligne dont les états dépendent de l'élément de ligne.

14. Procédé selon l'une quelconque des revendications précédentes, dans lequel l'étape d'analyse des interdépendances parmi certains ou tous les éléments de ligne comprend une étape (912, 1105) de détermination d'un type d'un élément de ligne identifié précité.

15. Procédé selon la revendication 14, dans lequel le type d'élément de ligne est déterminé être « entré» si son état ne dépend d'aucun autre élément de ligne.

16. Procédé selon la revendication 14, dans lequel le type d'élément de ligne est déterminé être « calcul » si la valeur de l'élément de ligne est déduit à l'aide d'une expression dépendant d'arguments basés sur des cellules.

17. Procédé selon la revendication 14, dans lequel le type d'élément de ligne est déterminé être « appel » si les valeurs de l'élément de ligne sont identiques à un autre élément de ligne précité au moyen d'une référence de cellule directe à des valeurs dans l'autre élément de ligne.

18. Procédé selon la revendication 16, dans lequel l'étape d'analyse des éléments de ligne identifiés du type calcul comprend les étapes (312) consistant à :
- obtenir des données de la ou des cellules du tableur contenant la formule à partir de laquelle la ou les valeurs de l'élément de ligne sont déduites ;
- décomposer les données décrivant la formule en jetons ; et
- si un jeton précité est une référence à une cellule de tableur, convertir la référence de cellule en une référence à un élément de ligne correspondant.

19. Procédé selon la revendication 16, dans lequel l'étape (312) d'analyse des éléments de ligne identifiés pour des éléments de ligne identifiés en tant que type calcul comprend les étapes consistant à :
- contrôler si sa formule porte sur des interdépendances parmi des éléments de ligne représentés par une série de valeurs ; et
- convertir la formule en une expression indiquant tout décalage dans ces interdépendances.

20. Procédé selon l'une quelconque des revendications précédentes, dans lequel l'étape de stockage des données comprend une étape de stockage de données supplémentaires associées à l'élément de ligne, les données associées étant choisies dans l'ensemble constitué par :
- le texte qui communique une signification quant au but de l'élément de ligne ;
- un indicateur indiquant si ou non l'élément de ligne est une constante (une valeur unique) ou une série (un tableau de valeurs) ;
- des tableaux référençant des pointeurs vers tout autre élément de ligne qui détermine l'état d'un élément de ligne particulier ;
- des tableaux référençant des pointeurs vers tout autre élément de ligne dont les états dépendent de l'élément de ligne ;
- une référence à un emplacement d'une ou plusieurs cellules dans le tableur avec lequel l'élément de ligne est associé ;
- des données décrivant comment des valeurs pour l'élément de ligne sont affichées ;
- des commentaires compris dans le dossier du tableur ; ou
- des commentaires associes à l'analyse des données du tableur.

21. Procédé selon la revendication 17, dans lequel l'étape de stockage de données comprend en outre une étape (2108) de filtration d'éléments de ligne du type appel pour qu'ils ne soient pas stockés.

22. Procédé selon l'une quelconque des revendications précédentes, comprenant en outre une étape consistant à fournir un affichage (2301) représentant au moins un élément de ligne.

23. Procédé selon la revendication 22, dans lequel les données affichées sont sélectionnables par l'utilisateur.

24. Procédé selon la revendication 23, dans lequel le fait de choisir un élément de ligne (2303) affiche tout élément de ligne (2304, 2305) qui détermine l'état de l'élément de ligne choisi ou de tout élément de ligne (2306) dont l'état dépend de l'élément de ligne choisi.

25. Procédé selon l'une quelconque des revendications 22 à 24, dans lequel l'affichage représente des relations entre des éléments de ligne au moyen de lignes allant d'un premier élément de ligne à tout autre élément de ligne qui détermine l'état du premier élément de ligne ou de tout autre élément de ligne dont l'état dépend d'un premier élément de ligne.

26. Procédé selon l'une quelconque des revendications 23 à 25, comprenant en outre une étape de stockage de données décrivant quels éléments de ligne sont choisis par un utilisateur.

27. Appareil (5) pour traiter des données se rapportant à un tableur, l'appareil comprenant :
- un composant d'analyse de tableur (7) pour identifier des éléments de ligne à partir de données constituant un tableur, où un élément de ligne est identifié en tant que groupe de données de cellules apparentées comprenant des données d'identifiant indiquant la signification ou le but de données dans le groupe, et une valeur ou une série de valeurs ;
- un composant (7) d'analyse d'élément de ligne pour analyser toute interdépendance parmi certains ou tous les éléments de ligne identifiés ; et
- un composant de sortie (7) pour stocker des données définissant au moins certains des éléments de ligne identifiés et des interdépendances identifiées.

28. Produit de programme d'ordinateur comprenant un support lisible par ordinateur, ayant sur celui-ci :
- un moyen de code de programme d'ordinateur, lorsque le code de programme est chargé, pour amener l'ordinateur à exécuter une procédure pour :
- identifier (306, 307, 308, 309, 310, 311) des éléments de ligne à partir de données (3) constituant un tableur, où un élément de ligne est identifié en tant que groupe de données de cellules apparentées comprenant des données d'identifiant indiquant la signification ou le but de données dans le groupe, et une valeur ou une série de valeurs ;
- analyser (310, 311, 312, 313) toute interdépendance parmi certains ou tous les éléments de ligne identifiés ; et
- stocker (315) des données définissant au moins certains des éléments de ligne identifiés et les interdépendances identifiées.
